# EUROPEAN PATENT APPLICATION

(11) **EP 4 084 469 A1**
(43) Date of publication of application: **02.11.2022**
(21) Application number: 20913594.6
(22) Date of filing: 04.12.2020
(51) Int. Cl.: H04N 7/14

(54) **VIDEO CALL-BASED SCREEN SHARING METHOD AND MOBILE DEVICE**

(30) Priority: 17.01.2020 CN 202010055716
(71) Applicant: Huawei Technologies Co., Ltd., Shenzhen, Guangdong 518129, (CN)
(72) Inventor: CAO, Wenyan, Shenzhen, Guangdong 518129 (CN)
(74) Representative: Körber, Martin Hans
(86) International application number: PCT/CN2020/133964
(87) International publication number: WO 2021/143391

(57) **Abstract**

Embodiments of this application relate to a screen sharing method based on a video call and a mobile device. The provided method includes: determining that a first mobile device establishes a video call with a second mobile device; determining that a video mode of the first mobile device is a screen sharing mode; displaying an interface of to-be-selected content; determining shared content based on a selection operation on the interface of the to-be-selected content; and sending the shared content to the second mobile device, so that the second mobile device displays the shared content. According to the screen sharing method based on a video call and the mobile device that are provided in embodiments of this application, screen sharing between mobile devices is implemented during a video call between the mobile devices, and shared content can be determined based on selection of to-be-selected content by a user. In the screen sharing process, user operations are simple, screen sharing is implemented with high efficiency and a fast speed, so that users' diversified requirements for screen sharing are met.

## Description

### TECHNICAL FIELD

This application relates to the field of electronic technologies, and in particular, to a screen sharing method based on a video call and a mobile device.

### BACKGROUND

With continuous progress of science and technology, using a mobile device such as a mobile phone to make a video call has become a common communication method in people's daily life. During a video call, a user can view video images of the other party and the user on a screen of the mobile device used by the user. However, as people's requirement for using a video call constantly changes, how to exchange content other than a video image during a video call is a technical problem that urgently needs to be resolved.

### SUMMARY

In view of this, to resolve the foregoing technical problem, this application provides a screen sharing method and apparatus that are based on a video call, a mobile device, a computer storage medium, and a computer program product.

According to one aspect of embodiments of this application, a screen sharing method based on a video call is provided, where the method includes:
determining that a first mobile device establishes a video call with a second mobile device;
determining that a video mode of the first mobile device is a screen sharing mode;
displaying an interface of to-be-selected content;
determining shared content based on a selection operation on the interface of the to-be-selected content; and
sending the shared content to the second mobile device, so that the second mobile device displays the shared content.

The screen sharing method based on a video call provided in embodiments of this application may be applied to the first mobile device. Screen sharing of the first mobile device with the second mobile device is implemented during a video call between the first mobile device and the second mobile device, and shared content can be determined based on selection of to-be-selected content by a user. In the screen sharing process, user operations are simple, screen sharing is implemented with high efficiency and a fast speed, so that users' diversified requirements for screen sharing are met.

In a possible implementation, the method further includes:
before the first mobile device establishes the video call with the second mobile device, the first mobile device sets, by default, the video mode during a video call to the screen sharing mode; or
before the first mobile device establishes the video call with the second mobile device, the first mobile device sets, based on a user operation, the video mode during a video call to the screen sharing mode; or
the first mobile device sets, based on a user operation, the video mode to the screen sharing mode during the video call.

In the foregoing manner, whether the video mode of the first mobile device is the screen sharing mode can be accurately determined.

In a possible implementation, the determining shared content based on a selection operation on the interface of the to-be-selected content includes:
determining a shared area in the interface of the to-be-selected content based on a detected first selection operation for the interface of the to-be-selected content, and determining the shared content based on the shared area; or
determining a non-shared area in the interface of the to-be-selected content based on a detected first selection operation for the interface of the to-be-selected content, determining a shared area based on the non-shared area, and determining the shared content based on the shared area.

In a manner of determining shared content by determining a shared area or a non-shared area, the shared content can be determined more accurately. In addition, when there is much to-be-selected content in an interface and display is complex, determining the shared content by using the shared area or the non-shared area can further simplify a user operation and improve a determining speed and efficiency.

In a possible implementation, the determining shared content based on a selection operation on the interface of the to-be-selected content includes:
when objects are displayed in the interface of the to-be-selected content, determining a shared object based on a detected second selection operation for the objects, and determining the shared content based on the shared object; or
when objects are displayed in the interface of the to-be-selected content, determining a non-shared object based on a detected second selection operation for the objects, determining a shared object based on the displayed objects and the non-shared object, and determining the shared content based on the shared object.

In a manner of determining shared content by using an object as a selection target, a user selects a displayed object, a second selection operation that needs to be performed is simple, and the shared content is determined with high efficiency and a fast speed. Especially when there is a small quantity of to-be-selected content and display is simple, efficiency and a speed of determining the shared content can be significantly improved.

In a possible implementation, the method further includes:
when it is detected that the first mobile device is in a video call state and the video mode of the first mobile device is the screen sharing mode, displaying the interface of the to-be-selected content, and highlighting the object existing in the interface of the to-be-selected content, where
a manner of the highlighting includes at least one of the following: displaying with a highlighted color and displaying with a frame.

An object is highlighted, so that a user can more clearly determine content that can be selected for sharing, and this helps the user select out the shared content.

In a possible implementation, the method further includes:
determining a non-shared object from objects displayed in the interface of the to-be-selected content; and
adding a non-shared label to the non-shared object.

The foregoing method may enable a user to determine, based on a non-shared label displayed in the interface, a shared object and a non-shared object. The first mobile device may determine a non-shared object in objects based on a record, and this helps further determine the shared content.

In a possible implementation, the determining shared content based on a selection operation on the interface of the to-be-selected content includes:
when it is detected that the to-be-selected content changes and the changed to-be-selected content still includes all or a part of the non-shared objects, determining newly added shared content based on a detected selection operation for an interface of the changed to-be-selected content; and
the sending the shared content to the second mobile device includes:
   determining new shared content based on non-shared labels of the all or a part of the non-shared objects and the newly added shared content, and sending the new shared content to the second mobile device.

The foregoing method helps simplify an operation that needs to be performed to determine new shared content, so that efficiency and a speed of determining the new shared content are improved.

In a possible implementation, the determining a non-shared object from objects displayed in the interface of the to-be-selected content includes:
determining a shared area in the interface of the to-be-selected content based on a detected first selection operation for the interface of the to-be-selected content, and determining the non-shared object based on the shared area; or
determining a non-shared area in the interface of the to-be-selected content based on a detected first selection operation for the interface of the to-be-selected content, and determining the non-shared object based on the non-shared area; or
when objects are displayed in the interface of the to-be-selected content, determining a shared object based on a detected second selection operation for the objects, and determining the non-shared object based on the shared object; or
when objects are displayed in the interface of the to-be-selected content, determining the non-shared object based on a detected second selection operation for the objects.

In the foregoing manner, the non-shared object can be determined quickly and efficiently, so that the shared object can be determined efficiently.

In a possible implementation, the sending the shared content to the second mobile device includes:
sending first data corresponding to the shared content to the second mobile device, so that the second mobile device generates, based on the first data, an interface corresponding to the shared content and displays the interface corresponding to the shared content; or
sending second data of an interface corresponding to the shared content to the second mobile device, so that the second mobile device displays, based on the second data, the interface corresponding to the shared content.

In the foregoing manner, an amount of data transmitted between devices may be reduced, bandwidth may be saved, efficiency and a speed of sending shared content may be improved, and a delay of screen sharing may be reduced. Alternatively, that a second mobile device accurately displays the shared content to the user is ensured, and smooth screen sharing is ensured.

In a possible implementation, that the first mobile device sets, based on a user operation, the video mode to the screen sharing mode during the video call includes:
displaying a first screen sharing control during the video call, and when it is detected that the first screen sharing control is triggered, setting the video mode to the screen sharing mode; or
during the video call, when it is detected that a shortcut corresponding to the screen sharing mode is triggered, setting the video mode to the screen sharing mode.

In the foregoing manner, the video mode of the first mobile device can be accurately and timely set to the screen sharing mode, and an operation that needs to be performed by the user is simple.

In a possible implementation, the method further includes:
when a shared content preview condition is met, displaying a preview interface corresponding to the shared content, where the shared content preview condition includes either of the following: a time interval between a current moment and a moment at which the last selection operation is detected is greater than or equal to a duration threshold, and a triggering operation for performing preview is detected; and
the sending the shared content to the second mobile device includes:
   when it is determined to send the shared content based on a detected operation for the preview interface, sending the shared content to the second mobile device.

In the foregoing manner, it is convenient for the user to determine, based on the preview interface, whether the shared content selected by the user is accurate.

In a possible implementation, the method further includes:
when it is determined, based on a detected operation for the preview interface, that shared content needs to be re-determined, determining new shared content based on a new selection operation for the interface of the to-be-selected content.

In the foregoing manner, accuracy of selecting shared content can be ensured.

In a possible implementation, the method further includes:
when a stop operation for the screen sharing mode is detected, stopping screen sharing.

In the foregoing manner, the screen sharing mode may be stopped timely based on a requirement of a user, to meet different use requirements of the user.

According to another aspect of embodiments of this application, a screen sharing method based on a video call is provided, where the method includes:
determining that a second mobile device establishes a video call with a first mobile device;
determining that a video mode of the second mobile device is a screen sharing mode; and
displaying shared content received from the first mobile device, where
the shared content is determined by the first mobile device based on a selection operation on an interface of displayed to-be-selected content.

The screen sharing method based on a video call provided in embodiments of this application may be applied to the second mobile device. Screen sharing of the first mobile device with the second mobile device is implemented during a video call between the second mobile device and the first mobile device, and the second mobile device may display the received selected shared content. In the screen sharing process, user operations are simple, screen sharing is implemented with high efficiency and a fast speed, so that users' diversified requirements for screen sharing are met.

In a possible implementation, the displaying shared content received from the first mobile device includes:
when it is determined that first data corresponding to the shared content is received, generating, based on the first data, an interface corresponding to the shared content, and displaying the interface corresponding to the shared content; or
when it is determined that second data of an interface corresponding to the shared content is received, displaying, based on the second data, the interface corresponding to the shared content.

In the foregoing manner, an amount of data transmitted between devices may be reduced, bandwidth may be saved, efficiency and a speed of sending shared content may be improved, and a delay of screen sharing may be reduced. Alternatively, that a second mobile device accurately displays the shared content to the user is ensured, and smooth screen sharing is ensured.

In a possible implementation, the determining that a video mode of the second mobile device is a screen sharing mode includes:
before the second mobile device establishes the video call with the first mobile device, the second mobile device sets, by default, the video mode during a video call to the screen sharing mode; or
before the second mobile device establishes the video call with the first mobile device, the second mobile device sets, based on a user operation, the video mode during a video call to the screen sharing mode; or
the second mobile device sets, based on a user operation, the video mode to the screen sharing mode during the video call.

In the foregoing manner, whether the video mode of the second mobile device is the screen sharing mode can be accurately determined.

According to another aspect of embodiments of this application, a mobile device is provided, where the mobile device includes:
a display;
one or more processors; and
one or more memories, where
the one or more memories store one or more computer programs, the one or more computer programs include instructions, and when the instructions are executed by the one or more processors, the mobile device is enabled to perform the following steps:
   determining that a first mobile device establishes a video call with a second mobile device;
   determining that a video mode of the first mobile device is a screen sharing mode;
   displaying, on the display, an interface of to-be-selected content;
   determining shared content based on a selection operation on the interface of the to-be-selected content; and
   sending the shared content to the second mobile device, so that the second mobile device displays the shared content.

In a possible implementation, when the instructions are executed by the one or more processors, the mobile device is further enabled to perform the following step:
before the first mobile device establishes the video call with the second mobile device, the first mobile device sets, by default, the video mode during a video call to the screen sharing mode; or
before the first mobile device establishes the video call with the second mobile device, the first mobile device sets, based on a user operation, the video mode during a video call to the screen sharing mode; or
the first mobile device sets, based on a user operation, the video mode to the screen sharing mode during the video call.

In a possible implementation, when the instructions are executed by the one or more processors, the mobile device is further enabled to perform the following step:
determining a shared area in the interface of the to-be-selected content based on a detected first selection operation for the interface of the to-be-selected content, and determining the shared content based on the shared area; or
determining a non-shared area in the interface of the to-be-selected content based on a detected first selection operation for the interface of the to-be-selected content, determining a shared area based on the non-shared area, and determining the shared content based on the shared area.

In a possible implementation, when the instructions are executed by the one or more processors, the mobile device is further enabled to perform the following step:
when objects are displayed in the interface of the to-be-selected content, determining a shared object based on a detected second selection operation for the objects, and determining the shared content based on the shared object; or
when objects are displayed in the interface of the to-be-selected content, determining a non-shared object based on a detected second selection operation for the objects, determining a shared object based on the displayed objects and the non-shared object, and determining the shared content based on the shared object.

In a possible implementation, when the instructions are executed by the one or more processors, the mobile device is further enabled to perform the following step:
when it is detected that the first mobile device is in a video call state and the video mode of the first mobile device is the screen sharing mode, displaying the interface of the to-be-selected content, and highlighting the object existing in the interface of the to-be-selected content, where
a manner of the highlighting includes at least one of the following: displaying with a highlighted color and displaying with a frame.

In a possible implementation, when the instructions are executed by the one or more processors, the mobile device is further enabled to perform the following steps:
determining a non-shared object from objects displayed in the interface of the to-be-selected content; and
adding a non-shared label to the non-shared object.

In a possible implementation, when the instructions are executed by the one or more processors, the mobile device is further enabled to perform the following steps:
when it is detected that the to-be-selected content changes and the changed to-be-selected content still includes all or a part of the non-shared objects, determining newly added shared content based on a detected selection operation for an interface of the changed to-be-selected content; and
determining new shared content based on non-shared labels of the all or a part of the non-shared objects and the newly added shared content, and sending the new shared content to the second mobile device.

In a possible implementation, when the instructions are executed by the one or more processors, the mobile device is further enabled to perform the following step:
determining a shared area in the interface of the to-be-selected content based on a detected first selection operation for the interface of the to-be-selected content, and determining the non-shared object based on the shared area; or
determining a non-shared area in the interface of the to-be-selected content based on a detected first selection operation for the interface of the to-be-selected content, and determining the non-shared object based on the non-shared area; or
when objects are displayed in the interface of the to-be-selected content, determining a shared object based on a detected second selection operation for the objects, and determining the non-shared object based on the shared object; or
when objects are displayed in the interface of the to-be-selected content, determining the non-shared object based on a detected second selection operation for the objects.

In a possible implementation, when the instructions are executed by the one or more processors, the mobile device is further enabled to perform the following step:
sending first data corresponding to the shared content to the second mobile device, so that the second mobile device generates, based on the first data, an interface corresponding to the shared content and displays the interface corresponding to the shared content; or
sending second data of an interface corresponding to the shared content to the second mobile device, so that the second mobile device displays, based on the second data, the interface corresponding to the shared content.

In a possible implementation, when the instructions are executed by the one or more processors, the mobile device is further enabled to perform the following step:
displaying a first screen sharing control during the video call, and when it is detected that the first screen sharing control is triggered, setting the video mode to the screen sharing mode; or
during the video call, when it is detected that a shortcut corresponding to the screen sharing mode is triggered, setting the video mode to the screen sharing mode.

In a possible implementation, when the instructions are executed by the one or more processors, the mobile device is further enabled to perform the following steps:
when a shared content preview condition is met, displaying a preview interface corresponding to the shared content, where the shared content preview condition includes either of the following: a time interval between a current moment and a moment at which the last selection operation is detected is greater than or equal to a duration threshold, and a triggering operation for performing preview is detected; and
when it is determined to send the shared content based on a detected operation for the preview interface, sending the shared content to the second mobile device.

In a possible implementation, when the instructions are executed by the one or more processors, the mobile device is further enabled to perform the following steps:
when it is determined, based on a detected operation for the preview interface, that shared content needs to be re-determined, determining new shared content based on a new selection operation for the interface of the to-be-selected content.

In a possible implementation, when the instructions are executed by the one or more processors, the mobile device is further enabled to perform the following step:
when a stop operation for the screen sharing mode is detected, stopping screen sharing.

Another aspect of embodiments of this application provides a

According to another aspect of embodiments of this application, a screen sharing apparatus based on a video call is provided, and the apparatus is configured to perform the foregoing screen sharing method that is based on a video call and that is applied to the first mobile device.

According to another aspect of embodiments of this application, a screen sharing apparatus based on a video call is provided, and the apparatus is configured to perform the foregoing screen sharing method that is based on a video call and that is applied to the second mobile device.

According to another aspect of embodiments of this application, a computer storage medium is provided, including computer instructions, where when the computer instructions are run on a mobile device, the mobile device is enabled to perform the foregoing screen sharing method that is based on a video call and that is applied to the first mobile device.

According to another aspect of embodiments of this application, a computer storage medium is provided, including computer instructions, where when the computer instructions are run on a mobile device, the mobile device is enabled to perform the foregoing screen sharing method that is based on a video call and that is applied to the second mobile device.

According to another aspect of embodiments of this application, a computer program product is provided, where when the computer program product is run on a computer, the computer is enabled to perform the screen sharing method that is based on a video call and that is applied to the first mobile device.

According to another aspect of embodiments of this application, a computer program product is provided, where when the computer program product is run on a computer, the computer is enabled to perform the screen sharing method that is based on a video call and that is applied to the second mobile device.

Exemplary embodiments are described in detail below with reference to accompanying drawings, to make other features and aspects of this application clearer.

### BRIEF DESCRIPTION OF DRAWINGS

Accompanying drawings included in the specification and constructing a part of the specification and the specification jointly show the exemplary embodiments, features and aspects of this application, and are intended to explain the principles of this application.
FIG. 1 is a schematic diagram of a structure of an electronic device 100 according to an embodiment of this application;
FIG. 2 is a block diagram of a software structure of an electronic device 100 according to an embodiment of this application;
FIG. 3 is a flowchart of a screen sharing method based on a video call according to an embodiment of this application;
FIG. 4 to FIG. 9 are schematic diagrams of application of a screen sharing method based on a video call according to an embodiment of this application;
FIG. 10 is a flowchart of a screen sharing method based on a video call according to an embodiment of this application; and
FIG. 11A to FIG. 11D are a schematic diagram of screen sharing in a screen sharing method based on a video call according to an embodiment of this application.

### DESCRIPTION OF EMBODIMENTS

The following describes various exemplary embodiments, features, and aspects of this application in detail with reference to accompanying drawings. Identical reference signs in the accompanying drawings indicate elements that have same or similar functions. Although various aspects of embodiments are shown in the accompanying drawings, unless otherwise specified, the accompanying drawings do not need to be drawn to scale.

The special term "exemplary" herein refers to "can be used as an example, embodiment, or illustration". Any embodiment described as "exemplary" is not necessarily explained as being superior or better than other embodiments.

In addition, to better describe this application, numerous specific details are given in the following specific implementations. A person skilled in the art should understand that this application can also be implemented without some specific details. In some embodiments, methods, means, elements and circuits that are well-known to a person skilled in the art are not described in detail, so that the subject matter of this application is highlighted.

A first mobile device and a second mobile device in embodiments of this application may be electronic devices that can perform a video call, such as (may be a portable mobile terminal, such as a mobile phone, a tablet computer, a netbook, or a personal digital assistant (Personal Digital Assistant, PDA), a wearable electronic device (such as a smart band or a smart watch), and a virtual reality device.

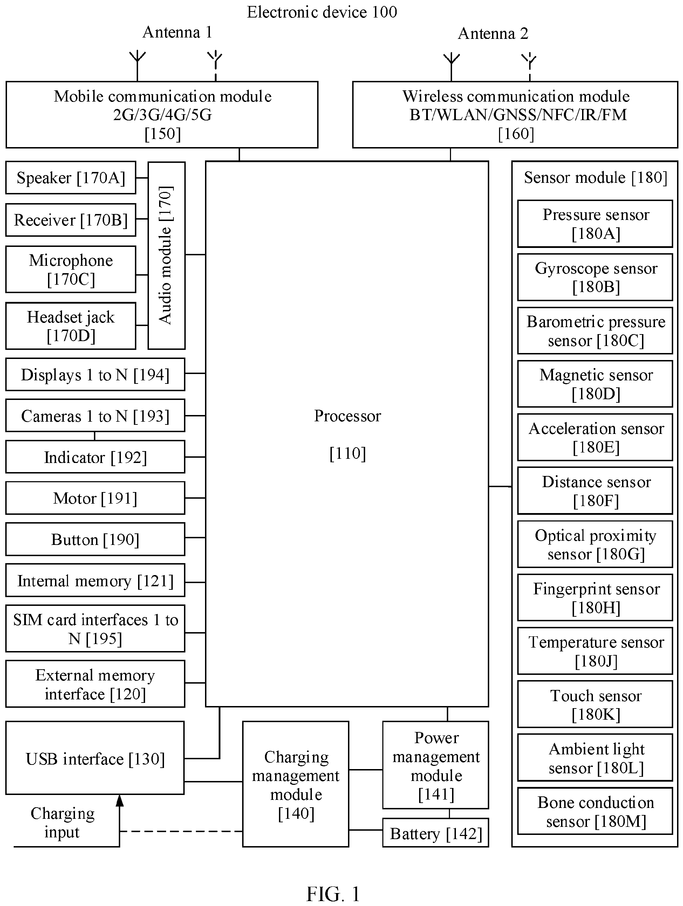

FIG. 1 is a schematic diagram of a structure of an electronic device 100 according to an embodiment of this application. As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, a timer 196, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to control instruction fetching and instruction execution.

A memory may be further disposed in the processor 110, and is configured to store instructions and data. In some embodiments, the memory in the processor 110 is a cache. The memory may store instructions or data that has been used or is cyclically used by the processor 110. If the processor 110 needs to use the instructions or the data again, the processor 110 may directly invoke the instructions or the data from the memory. In this way, repeated access is avoided, waiting time of the processor 110 is reduced, and system efficiency is improved. In this embodiment of this application, the processor 110 may be configured to: calculate, based on a user characteristic, a threshold applicable to a user; and further determine, based on the threshold, whether a pressing operation entered by the user is a long press operation or a short press operation, and make an accurate response.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a Mini USB interface, a Micro USB interface, a USB Type-C interface, or the like. The USB interface 130 may be configured to connect to a charger to charge the electronic device 100, or may be configured to transmit data between the electronic device 100 and a peripheral device, or may be used to connect to a headset, to play audio through the headset. The interface may further be used to connect to another electronic device such as an AR device.

It may be understood that an interface connection relationship between modules illustrated in this embodiment of this application is merely an example for description, and does not constitute a limitation on a structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from a charger. The charger may be a wireless charger, or may be a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be multiplexed to improve antenna utilization. For example, the antenna 1 may be multiplexed as a diversity antenna in a wireless local area network. In some other embodiments, an antenna may be used in combination with a tuning switch.

The mobile communication module 150 may provide a solution that includes wireless communication such as 2G/3G/4G/5G and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation by using the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. After the low-frequency baseband signal is processed by the baseband processor, a processed low-frequency baseband signal is transmitted to the application processor. The application processor outputs a sound signal by using an audio device (which is not limited to the speaker 170A, the receiver 170B, and the like), or displays an image or a video on the display 194. In some embodiments, the modem processor may be an independent component. In some other embodiments, the modem processor may be independent of the processor 110, and is disposed in a same component with the mobile communication module 150 or another function module.

The wireless communication module 160 may provide a solution that is applied to the electronic device 100 and that includes wireless communication such as a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave by using the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation by using the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TDSCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite-based augmentation system (satellite based augmentation systems, SBAS).

The electronic device 100 implements a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), Miniled, MicroLed, Micro-oLed, a quantum dot light emitting diode (quantum dot light emitting diodes, QLED), or the like. In some embodiments, the electronic device 100 may include one or N displays 194, where N is a positive integer greater than 1.

The electronic device 100 can implement a shooting function through the ISP, the camera 193, the video codec, the GPU, the display 194, the application processor, and the like.

The ISP is configured to process data fed back by the camera 193. For example, during photographing, a shutter is pressed, and a light ray is transmitted to a photosensitive element of a camera through a lens. An optical signal is converted into an electrical signal. The photosensitive element of the camera transmits the electrical signal to the ISP for processing, and converts the electrical signal into a visible image. The ISP may further perform algorithm optimization on noise, brightness, and complexion that are of the image. The ISP may further optimize parameters such as exposure and color temperature that are of a shooting scenario. In some embodiments, the ISP may be disposed in the camera 193.

The camera 193 is configured to capture a static image or a video. An optical image of an object is generated by using the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format, for example, an RGB format or a YUV format. In some embodiments, the electronic device 100 may include one or N cameras 193, where N is a positive integer greater than 1.

The digital signal processor is configured to process a digital signal, and may process another digital signal in addition to a digital image signal. For example, when the electronic device 100 selects a frequency, the digital signal processor is configured to perform Fourier transform or the like on frequency energy.

The video codec is configured to compress or decompress a digital video. The electronic device 100 may support one or more types of video codecs. Therefore, the electronic device 100 may play or record videos in a plurality of coding formats, for example, moving picture experts group (moving picture experts group, MPEG) 1, MPEG 2, MPEG 3, and MPEG 4.

The NPU is a neural-network (neural-network, NN) computing processor. The NPU quickly processes input information by using a structure of a biological neural network, for example, by using a transfer mode between human brain neurons, and may further continuously perform self-learning. Applications such as intelligent cognition of the electronic device 100, for example, image recognition, facial recognition, speech recognition, and text understanding, can be implemented by using the NPU.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code, and the executable program code includes instructions. The internal memory 121 may include a program storage area and a data storage area. The program storage area may store an operating system, an application required by at least one function (for example, a sound playing function or an image playing function), and the like. The data storage area may store data (for example, audio data, and a phone book) created in a process of using the electronic device 100, and the like. In addition, the internal memory 121 may include a high-speed random access memory, or may include a nonvolatile memory, such as at least one magnetic disk storage device, a flash memory, or a universal flash storage (universal flash storage, UFS). The processor 110 runs instructions stored in the internal memory 121 and/or instructions stored in the memory disposed in the processor, to perform various function applications of the electronic device 100 and data processing.

The electronic device 100 may implement audio functions by using the audio module 170, the speaker 170A, the receiver 170B, the microphone 170C, the headset jack 170D, the application processor, and the like. For example, a music playback function and a recording function are implemented.

The audio module 170 is configured to convert digital audio information into an analog audio signal for output, and is also configured to convert an analog audio input into a digital audio signal. The audio module 170 may further be configured to encode and decode an audio signal. In some embodiments, the audio module 170 may be disposed in the processor 110, or some function modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "microphone", is configured to convert a sound signal into an electrical signal. When making a call or sending voice information, a user may make a sound near the microphone 170C through the mouth of the user, to enter a sound signal to the microphone 170C. At least one microphone 170C may be disposed in the electronic device 100. In some other embodiments, two microphones 170C may be disposed in the electronic device 100, to collect a sound signal and further implement a noise reduction function. In some other embodiments, three, four, or more microphones 170C may alternatively be disposed in the electronic device 100, to collect a sound signal, implement noise reduction, and identify a sound source, to implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates that are made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation by using the pressure sensor 180A. The electronic device 100 may calculate a touch location based on a detection signal of the pressure sensor 180A. In some embodiments, touch operations that are performed at a same touch position but have different touch operation intensity may correspond to different operation instructions. For example, when a touch operation whose touch operation intensity is less than a first pressure threshold is performed on a Messages application icon, instructions for viewing an SMS message are performed. When a touch operation whose touch operation intensity is greater than or equal to the first pressure threshold is performed on the Messages application icon, instructions for creating an SMS message are performed.

The gyroscope sensor 180B may be configured to determine a motion posture of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be used in a navigation scenario and a motion-sensing game scenario.

The barometric pressure sensor 180C is configured to measure barometric pressure. In some embodiments, the electronic device calculates an altitude based on a barometric pressure value measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device is a flip phone, the electronic device may detect opening and closing of a flip cover by using the magnetic sensor 180D. Further, a feature such as automatic unlocking upon opening of the flip cover is set based on a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a shooting scenario, the electronic device may measure the distance by using the distance sensor 180F, to implement quick focusing.

The optical proximity sensor 180G may include a light-emitting diode (LED) and an optical detector, for example, a photodiode. The light-emitting diode may be an infrared light-emitting diode. The electronic device emits infrared light by using the light-emitting diode. The electronic device detects reflected infrared light from a nearby object by using the photodiode. When detecting sufficient reflected light, the electronic device may determine that there is an object near the electronic device. When detecting insufficient reflected light, the electronic device may determine that there is no object near the electronic device. The electronic device 100 may detect, by using the optical proximity sensor 180G, that the user holds the electronic device 100 close to an ear for a call, to automatically turn off a screen for power saving. The optical proximity sensor 180G may also be configured to automatically unlock and lock a screen in a flip cover mode and a pocket mode.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application access locking, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor near the temperature sensor 180J, to reduce power consumption and implement thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown due to a low temperature.

The touch sensor 180K is also referred to as a "touch component". The touch sensor 180K may be disposed on the display 194. The touch sensor 180K and the display 194 constitute a touchscreen, and the touchscreen is also referred to as a "touch control screen". The touch sensor 180K is configured to detect a touch operation performed on or near the touch sensor. The touch sensor may transfer the detected touch operation to the application processor, to determine a type of a touch event. A visual output related to the touch operation may be provided on the display 194. In some other embodiments, the touch sensor 180K may alternatively be disposed on a surface of the electronic device 100 at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse to receive a blood pressure beating signal. In some embodiments, the bone conduction sensor 180M may alternatively be disposed in a headset to form a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to user settings and function control of the electronic device 100.

The motor 191 may generate a vibration prompt. The motor 191 may be used for an incoming call vibration prompt, or may be used for a touch vibration feedback. For example, touch operations performed on different applications (such as a photographing application and an audio playing application) may correspond to different vibration feedback effects. The motor 191 may also correspond to different vibration feedback effects for touch operations performed in different areas of the display 194. Different application scenarios (for example, time reminding, information receiving, an alarm clock, and a game) may also correspond to different vibration feedback effects. A touch vibration feedback effect may be customized.

The indicator 192 may be an indicator lamp, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100.

The timer 196 may be used for timing. In this embodiment of this application, the timer 196 may be configured to record pressing duration of the pressing operation entered by the user, so that the processor 110 determines, based on the pressing duration, whether the pressing operation entered by the user is a long press operation or a short press operation. The electronic device may support one or N SIM card interfaces, where N is a positive integer greater than 1. The SIM card interface 195 can support a Nano-SIM card, a Micro-SIM card, a SIM card, and the like. A plurality of cards may be inserted into a same SIM card interface 195 at the same time. The plurality of cards may be of a same type or of different types. The SIM card interface 195 may also be compatible with different types of SIM cards. The SIM card interface 195 may also be compatible with the external storage card. The electronic device interacts with a network by using the SIM card, to implement functions such as calling and data communication. In some embodiments, the electronic device uses an eSIM, namely, an embedded SIM card. The eSIM card may be embedded into the electronic device, and cannot be separated from the electronic device.

All technical solutions in the following embodiments may be implemented in the electronic device that has the foregoing hardware architecture.

A software system of the electronic device 100 may use a layered architecture, an event-driven architecture, a microkernel architecture, a micro service architecture, or a cloud architecture. The software system of the electronic device 100 may be implemented based on a Windows system, an Android system, an iOS system, a Harmony system, or the like. This is not limited in this application.

To facilitate understanding of the software system of the electronic device 100 in this application, in this embodiment of this application, an Android system with a layered architecture is used as an example to describe a software structure of the electronic device 100.

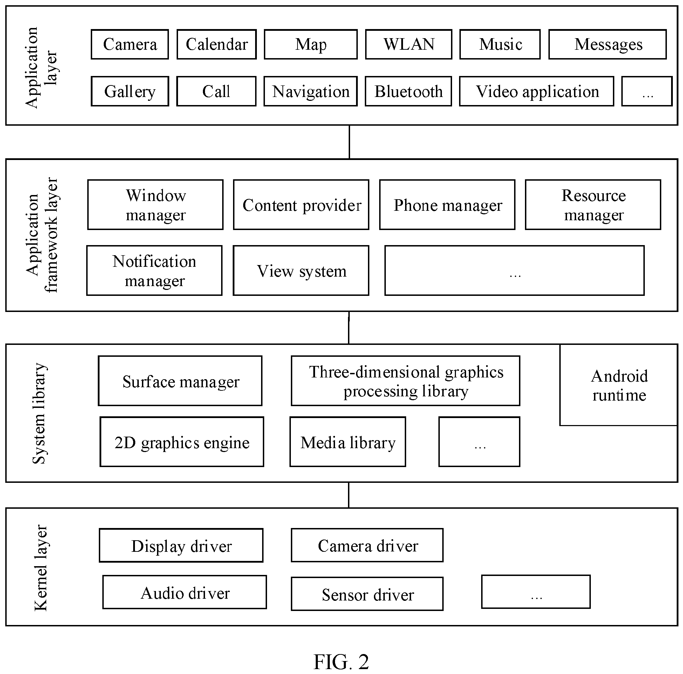

FIG. 2 is a block diagram of a software structure of an electronic device 100 according to an embodiment of this application. In the layered architecture, software is divided into several layers, and each layer has a clear role and task. The layers communicate with each other by using a software interface. In some embodiments, the Android system is divided into four layers: an application layer, an application framework layer, an Android runtime (Android runtime) and system library, and a kernel layer from top to bottom.

The application layer may include a series of application packages. As shown in FIG. 2, the application packages may include applications such as Camera, Gallery, Calendar, Call, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and received, a browsing history and bookmarks, a phone book, and the like.

The view system includes visual controls, such as a control for displaying a text and a control for displaying an image. The view system may be configured to construct an application. A display interface may include one or more views. For example, a display interface including a Messages notification icon may include a text display view and an image display view.

The phone manager is configured to provide a communication function of the electronic device 100, for example, management of a call status (including answering, declining, or the like).

The resource manager provides, for an application, various resources such as a localized character string, an icon, a picture, a layout file, and a video file.

The notification manager enables an application to display notification information in the status bar, and may be configured to transmit a notification-type message. The displayed information may automatically disappear after a short pause without user interaction. For example, the notification manager is configured to notify download completion, provide a message notification, and the like. The notification manager may alternatively be a notification that appears in a top status bar of the system in a form of a graph or a scroll bar text, for example, a notification of an application running on the background or a notification that appears on a screen in a form of a dialog window. For example, text information is prompted in the status bar, a prompt tone is produced, the electronic device vibrates, or an indicator light blinks.

The Android runtime includes a kernel library and a virtual machine. The Android runtime is responsible for scheduling and management of the Android system.

The kernel library includes two parts: a function that needs to be invoked in java language and a core library of Android.

The application layer and the application framework layer run on the virtual machine. The virtual machine executes java files at the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG 4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to a screen sharing scenario in a video call. According to the screen sharing method based on a video call provided in this embodiment of this application, it is determined that a first mobile device establishes a video call with a second mobile device; it is determined that a video mode of the first mobile device is a screen sharing mode; an interface of to-be-selected content is displayed; shared content is determined based on a selection operation on the interface of the to-be-selected content; and the shared content is sent to the second mobile device, so that the second mobile device displays the shared content. During a video call, screen sharing is implemented, and shared content may be determined based on selection of to-be-selected content by a user, so that users' diversified requirements for screen sharing are met.

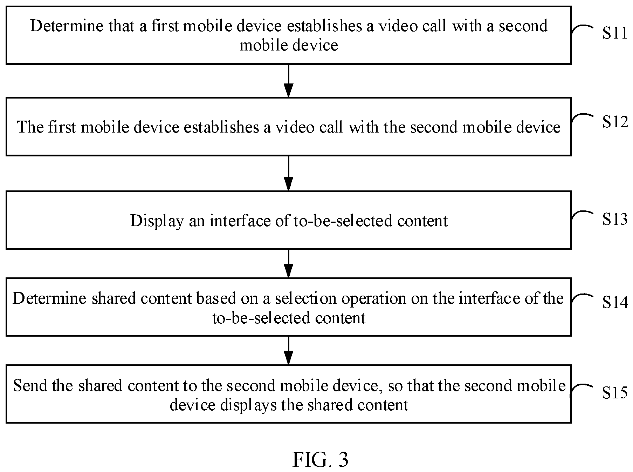

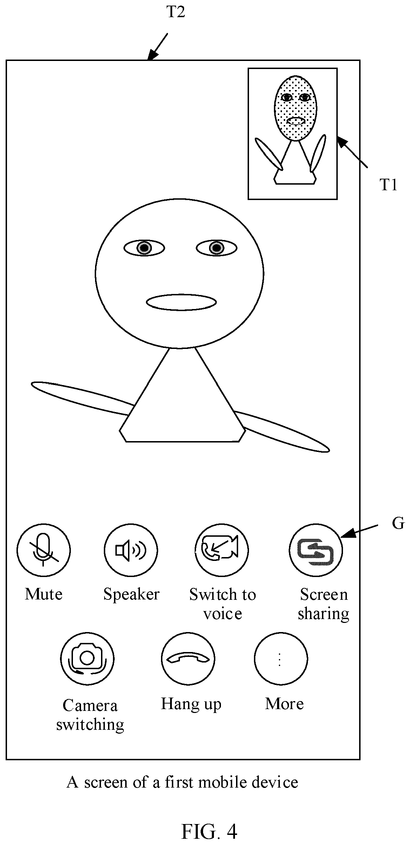

FIG. 3 is a flowchart of a screen sharing method based on a video call according to an embodiment of this application. FIG. 4 to FIG. 9 are schematic diagrams of application of a screen sharing method based on a video call according to an embodiment of this application. As shown in FIG. 3, the method is applied to a first mobile device, and the method includes step S11 to step S15.

Step S11: Determine that the first mobile device establishes a video call with a second mobile device.

In this embodiment, after the first mobile device establishes a video call with the second mobile device under an action of a processor of the first mobile device, a video application determines, based on an operation performed by a user, content that needs to be displayed on a screen; and a surface manager controls, based on the content that needs to be displayed, display of the content on the screen.

In this embodiment, the first mobile device may simultaneously establish a video call with one or more second mobile devices. The video call may be initiated by the first mobile device or the second mobile device based on an operation performed by a user. For example, a user initiates a video call request to a user of the second mobile device by using the first mobile device, the second mobile device accepts, based on a confirmation operation performed by the user, the video call request initiated by the first mobile device, and returns information indicating that the video call is agreed, and then the first mobile device may establish the video call with the second mobile device. Alternatively, the first mobile device accepts a video call request initiated by the user of the second mobile device, and returns information indicating that the video call is agreed, and then the first mobile device may establish the video call with the second mobile device. A person skilled in the art may set a manner of establishing a video call based on an actual requirement. This is not limited in this application.

Step S12: Determine that a video mode of the first mobile device is a screen sharing mode.

In this embodiment, the video mode of the first mobile device may include a screen sharing mode and a conventional video mode. In the conventional video mode, the first mobile device displays, on a screen (that is, a display), a video image shot by the second mobile device, and the first mobile device sends a video image shot by the first mobile device to the second mobile device, so that the second mobile device displays the video image. In the screen sharing mode, the first mobile device sends, to the second mobile device while the first mobile device implements an operation performed in the conventional video mode, content that needs to be shared and is determined by the user, so that the second mobile device may display the shared content on a screen.

In a possible implementation, the method may further include determining whether the video mode is a video sharing mode, where a determining manner of whether the video mode is the video sharing mode may include any one of the following determining manners 1, 2, and 3.

In a first determining manner, before the first mobile device establishes the video call with the second mobile device, the first mobile device sets, by default, the video mode during a video call to the screen sharing mode. The processor of the first mobile device may query the default setting to determine whether the video mode of the first mobile device is the screen sharing mode.

In a second determining manner, before the first mobile device establishes the video call with the second mobile device, the first mobile device sets, based on a user operation, the video mode during a video call to the screen sharing mode. Before establishing the call, the processor of the first mobile device may query, from the video application, a video mode indicated by the user operation, to determine whether the video mode of the first mobile device is the screen sharing mode.

In a third determining manner, the first mobile device sets, based on a user operation, the video mode to the screen sharing mode during the video call. During the video call, a processor of the first mobile device may query, from the video application, a video mode indicated by the user operation, to determine whether the video mode of the first mobile device is the screen sharing mode.

In this implementation, after determining, based on the foregoing determining manners 1, 2, and 3, that the video mode is the video sharing mode, the first mobile device may first send a screen sharing request to the second mobile device. If the second mobile device returns instructions or information for confirming screen sharing after receiving the screen sharing request, it is determined that the first mobile device can perform a video call with the second mobile device in a screen sharing mode. If the second mobile device returns instructions or information for rejecting screen sharing after receiving the screen sharing request, it is determined that the first mobile device cannot perform a video call with the second mobile device in a screen sharing mode, and can perform a video call with the second mobile device only in the conventional video mode. The sending a screen sharing request may include: before the first mobile device establishes a video call with the second mobile device, if the first mobile device determines that the video mode of the first mobile device is the screen sharing mode based on the default setting or the user operation, after or before the first mobile device establishes the video call with the second mobile device, the first mobile device may first send the screen sharing request to the second mobile device, or simultaneously send the screen sharing request when sending a video call request to the second mobile device, or send the screen sharing request to the second mobile device as a part of the video call request. The sending a screen sharing request may further include: In a process in which the first mobile device establishes the video call with the second mobile device, if the user of the first mobile device determines, through an operation, that the user sets the video mode to the screen sharing mode, the first mobile device can first send the screen sharing request to the second mobile device.

In a possible implementation, during the video call or before the video call is established, the first mobile device may further, automatically or when it is determined that the user allows the first mobile device to set the video mode of the first mobile device to the screen sharing mode, set the video mode of the first mobile device to the screen sharing mode based on the screen sharing request from the second mobile device.

In the foregoing manner, whether the video mode of the first mobile device is the screen sharing mode can be accurately determined.

In a possible implementation, that the first mobile device sets, based on a user operation, the video mode to the screen sharing mode during the video call may include: displaying a first screen sharing control during the video call, and when it is detected that the first screen sharing control is triggered, setting the video mode to the screen sharing mode; or during the video call, when it is detected that a shortcut corresponding to the screen sharing mode is triggered, setting the video mode to the screen sharing mode.

In this implementation, a virtual control, a physical button (for example, a corresponding button disposed on a side frame of the first mobile device), and/or a shortcut (for example, double-tapping a power button or area is set to a shortcut for enabling and/or disabling the screen sharing mode) that are/is used to enable and/or disable the screen sharing mode may be disposed on the first mobile device. If it is detected that the virtual control, the physical button, and/or the shortcut are/is triggered during the video call and/or before the video call is established, the video mode of the first mobile device is set to the screen sharing mode. A manner of triggering the virtual control and the physical button may be detecting an operation performed by a user, such as touching and holding, sliding, or double-tapping. This is not limited in this application.

To facilitate a user operation, different virtual controls may be set during the video call and before the video call. For example, before the video call, an option that facilitates selection of a video mode by the user may be set in "Settings" of the first mobile device, when it is determined, based on an operation that is performed by the user for the option for selection of a video mode, that the user selects the video mode as a screen sharing mode, the video mode of the first mobile device is set to the screen sharing mode. During the video call, a first screen sharing control (a control G shown in FIG. 4) for enabling and/or disabling the screen sharing mode may be displayed for the user in an interface of the video call. When it is determined, based on an operation of the user, that the first screen sharing control is triggered, it is determined that the video mode of the first mobile device is the screen sharing mode. A manner of triggering the first screen sharing control may be detecting an operation performed by a user, such as touching and holding, sliding, or double-tapping. This is not limited in this application.

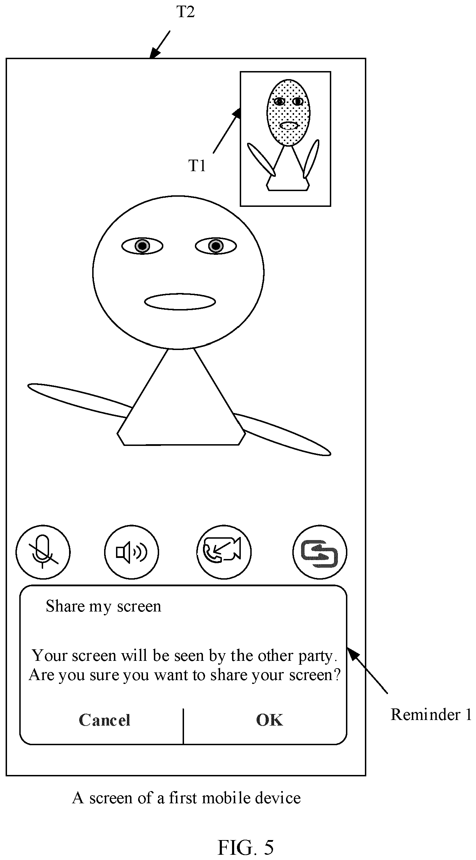

In a possible implementation, during the video call, when determining, based on the user operation, that the user wants to set the video mode to the screen sharing mode, the first mobile device may first send a reminder (a reminder 1 shown in FIG. 5) that the screen sharing mode is to be enabled, to remind the user to further determine whether to set the video mode to the screen sharing mode. The reminder may be implemented in a form of a pop-up window or the like. In the pop-up window, a text and/or a picture are/is used to remind the user whether to set the video mode to the screen sharing mode. In this way, it is avoided that the video mode is incorrectly set to the screen sharing mode due to a reason such as an accidental touch of the user, to avoid violating an actual use requirement of the user.

It should be understood that the foregoing several determining manners of determining that the video mode of the first mobile device is the screen sharing mode are merely some examples provided in this application. A person skilled in the art may further set an implementation of "determining that the video mode of the first mobile device is the screen sharing mode" based on an actual requirement. This is not limited in this application.

In the foregoing manner, the video mode of the first mobile device can be accurately and timely set to the screen sharing mode, and an operation that needs to be performed by the user is simple.

Step S13: Display an interface of to-be-selected content.

In this embodiment, the surface manager of the first mobile device controls, based on the to-be-selected content, to display the interface of the to-be-selected content on a screen of the first mobile device. The interface of the to-be-selected content may be an interface that is preset based on an operation of the user, an interface that is set by the first mobile device by default, an interface that is selected by the user during the video call, or the like. For example, the interface of the to-be-selected content may be an interface that can be displayed by the first mobile device for the user, such as a desktop of the first mobile device, a "settings" function interface of the first mobile device, an interface for using an application on the first mobile device, or an interface displayed when a web page is browsed on the first mobile device. This is not limited in this application.

In a possible implementation, when the interface of the to-be-selected content is displayed, content related to the video call, such as a video image shot by the second mobile device and a control for exiting the screen sharing mode, may be further displayed on the screen. In this way, it is ensured that, while the user selects the to-be-selected content, the user can normally have a video call with the user of the second mobile device.

In a possible implementation, the method may further include: when it is detected that the first mobile device is in a video call state and the video mode of the first mobile device is the screen sharing mode, displaying the interface of the to-be-selected content, and highlighting an object existing in the interface of the to-be-selected content.

A manner of the highlighting may include at least one of the following: displaying with a highlighted color (for example, increasing brightness of the object in the interface) and displaying with a frame (for example, adding a preset-type frame for the object). The manner of the highlighting may further include a manner different from a display manner of remaining content in the interface, such as changing a color of the object, making the object blink, or making the object bounce. Objects may alternatively be highlighted in a list in the interface. The objects may be highlighted in a same manner, or may be highlighted in different manners. This is not limited in this application.

In this implementation, the to-be-selected content in the interface may be displayed in a layer manner. For example, different to-be-selected content in the interface is displayed by stacking a plurality of layers. The object on the interface of the to-be-selected content may be content that is in the to-be-selected content and that can be independently displayed at a layer and has an independent display feature, for example, a video image that is shot by the first mobile device and displayed during the video call, a video image shot by the second mobile device, content related to the video call, such as a "mute" control and a "hang up" control, or content that can be selected by the user, such as a dialog (Dialog) window, a toast (Toast), an application window, and an application icon. This is not limited in this application.

In this way, an object is highlighted, so that a user can more clearly determine content that can be selected for sharing, and this helps the user select out the shared content.

Step S14: Determine shared content based on a selection operation on the interface of the to-be-selected content.

In this embodiment, the video application of the first mobile device determines the shared content based on a detected selection operation performed by the user. A manner of determining the shared content may include one or more of the following manners: determining in advance based on a selection operation of the user, determining based on the default setting of the first mobile device, determining based on a selection operation that is sent by the user and that is detected during the video call, or the like. This is not limited in this application.

In a possible implementation, a selection operation of the user may be used to determine a shared area or a non-shared area selected by the user, and further the shared content is determined. In this case, step S14 may include any one of the following steps: determining a shared area in the interface of the to-be-selected content based on a detected first selection operation for the interface of the to-be-selected content, and determining the shared content based on the shared area; or determining a non-shared area in the interface of the to-be-selected content based on a detected first selection operation for the interface of the to-be-selected content, determining a shared area based on the non-shared area, and determining the shared content based on the shared area.

In this implementation, an area selection box for area selection may be displayed in the interface of the to-be-selected content, and an area in which the area selection box that is finally determined by the user is located may be determined as the shared area based on the first selection operation of adjusting, by the user, a position and a size of the area selection box in the interface. Further, to-be-selected content in the shared area is determined as the shared content. Alternatively, an area in which the area selection box that is finally determined by the user is located may be determined as the non-shared area based on the first selection operation of adjusting, by the user, a position and a size of the area selection box in the interface. Further, an area in the interface except the non-shared area is determined as the shared area, so that to-be-selected content in the shared area is determined as the shared content. Alternatively, after the non-shared area is determined, a part of to-be-selected content that is outside the non-shared area and that is in the to-be-selected content may be determined as the shared content. The area selection box may be a box of a preset shape such as a circle or a square. The area selection box may alternatively be determined based on the first selection operation such as single-point or multi-point sliding performed by the user on the interface of the to-be-selected content. For example, the area selection box is determined based on a detected track of single-point sliding performed by the user on the interface of the to-be-selected content. The foregoing implementations of determining the shared area or the non-shared area are merely several examples provided in this application. A person skilled in the art may set an implementation of determining a shared area or a non-shared area based on an actual requirement. This is not limited in this application.

In a manner of determining shared content by determining a shared area or a non-shared area, the shared content can be determined more accurately. In addition, when there is much to-be-selected content in an interface and display is complex, determining the shared content by using the shared area or the non-shared area can further simplify a user operation and improve a determining speed and efficiency. For example, when an interface displayed when the first mobile device browses a web page is displayed, rich content in the web page is displayed in the interface. This is more applicable to a case in which the shared area or the non-shared area is first determined, and then the shared content is further determined.

In a possible implementation, when objects are displayed in the interface of the to-be-selected content, a selection operation of the user may be used to determine a shared object or a non-shared object from the objects, and further the shared content is determined. In this case, step S14 may also include: when objects are displayed in the interface of the to-be-selected content, determining a shared object based on a detected second selection operation for the objects, and determining the shared content based on the shared object; or when objects are displayed in the interface of the to-be-selected content, determining a non-shared object based on a detected second selection operation for the objects, determining a shared object based on the displayed objects and the non-shared object, and determining the shared content based on the shared object.

In this implementation, the first mobile device may determine a selected object as the shared object or the non-shared object based on a detected second selection operation such as tapping, touching and holding, sliding, or circle selection performed by the user on the object. If the non-shared object is determined based on the second selection operation, the shared object needs to be further determined.

In a manner of determining shared content by using an object as a selection target, a user selects a displayed object, a second selection operation that needs to be performed is simple, and the shared content is determined with high efficiency and a fast speed. Especially when there is a small quantity of to-be-selected content and display is simple, efficiency and a speed of determining the shared content can be significantly improved. For example, when a desktop of the first mobile device is displayed in the interface, applications on the desktop are displayed in the interface. This is more applicable to a case in which the shared content is determined by selecting an object.

Step S15: Send the shared content to the second mobile device, so that the second mobile device displays the shared content.

In this embodiment, the processor of the first mobile device sends the shared content to the second mobile device. After determining the shared content, the first mobile device may send, to the second mobile device, data that is required by the second mobile device to display the shared content, so that the second mobile device may display the shared content on a screen for the user based on the received data.

In this embodiment, when the first mobile device sends the shared content to the second mobile device or after the first mobile device sends the shared content to the second mobile device, "the interface of the to-be-selected content" may continue to be presented to the user on the screen of the first mobile device, so that the user views, operates, or the like the to-be-selected content. The first mobile device may change content in the interface of the to-be-selected content based on an operation performed by the user on the interface of the to-be-selected content. For example, when the interface of the to-be-selected content is the "Settings" function interface of the first mobile device, a "Bluetooth" function interface in the "Settings" function may be entered based on an operation performed on the "Settings" interface, and the to-be-selected content changes.

In this embodiment, the first mobile device may further determine the non-shared content in the to-be-selected content based on the shared content. Then, when the to-be-selected content in "the interface of the to-be-selected content" changes, it is determined whether a selection operation performed by the user is detected. If no selection operation is detected, new shared content is determined based on content and non-shared content that are in a changed "interface of to-be-selected content", and then the new shared content is sent to the second mobile device. If the selection operation is detected, new shared content is determined based on the selection operation, and then the new shared content is sent to the second mobile device. Alternatively, if the selection operation is detected, newly added shared content in a changed "interface of to-be-selected content" may be determined based on the selection operation, and then new shared content is determined based on the newly added shared content and the original shared content. The new shared content includes the newly added shared content, and content that is in the original shared content and that still exists in the changed "interface of to-be-selected content".

In this embodiment, when determining that the shared content changes and sending new shared content, the first mobile device may determine a content change status based on the new shared content and the original shared content, and send the content change status to the second mobile device.

In a possible implementation, the first mobile device may further display, on the screen of the first mobile device, duration in which the screen has been continuously shared. In this way, the user of the first mobile device may be reminded of the duration of screen sharing.

The screen sharing method based on a video call provided in embodiments of this application may be applied to the first mobile device. Screen sharing of the first mobile device with the second mobile device is implemented during a video call between the first mobile device and the second mobile device, and shared content can be determined based on selection of to-be-selected content by a user. In the screen sharing process, user operations are simple, screen sharing is implemented with high efficiency and a fast speed, so that users' diversified requirements for screen sharing are met.

In a possible implementation, the first mobile device may determine, based on device information of the second mobile device or a data sharing requirement from the second mobile device, data required by the second mobile device to display the shared content for the user, and further determine a manner of sending the shared content. Step S15 may be implemented in either of the following manners 1 and 2 of sending the shared content.

In a first manner of sending the shared content, when it is determined that the second mobile device may generate and display a corresponding interface for the user based on first data related to the shared content, such as a name, a number, or a function description of the shared content, the first mobile device may send the first data corresponding to the shared content to the second mobile device, so that the second mobile device generates, based on the first data, the interface corresponding to the shared content and displays the interface corresponding to the shared content. In this way, an amount of data transmitted between devices may be reduced, bandwidth may be saved, efficiency and a speed of sending shared content may be improved, and a delay of screen sharing may be reduced.

In a second manner of sending the shared content, when it is determined that the second mobile device cannot generate and display a corresponding interface for the user based on first data related to the shared content, or it cannot be determined whether the second mobile device can generate and display a corresponding interface for the user based on first data related to the shared content, the first mobile device may first generate the corresponding interface based on the shared content, and send second data of the interface corresponding to the shared content to the second mobile device, so that the second mobile device displays, based on the second data, the interface corresponding to the shared content. In this way, that a second mobile device accurately displays the shared content to the user is ensured, and smooth screen sharing is ensured.

In this implementation, before sending the shared content, the first mobile device may first determine the device information related to the second mobile device, such as a model, a system version, and a manufacturer of the second mobile device, and determine, based on the device information, whether the first data or the second data needs to be sent to the second mobile device. Alternatively, before sending the shared content, the first mobile device may first obtain the data sharing requirement from the second mobile device, to determine whether the first data or the second data needs to be sent to the second mobile device. The data sharing requirement may indicate whether the second mobile device requires the first data or the second data. The data sharing requirement may be actively sent by the second mobile device, or may be fed back by the second mobile device in response to a request from the first mobile device. This is not limited in this application.

In this implementation, when determining that the shared content changes and sending new shared content, the first mobile device may determine a content change status based on the new shared content and the original shared content, and send the first data or the second data to the second mobile device based on the content change status.

In a possible implementation, the method may further include: determining a non-shared object from objects displayed in the interface of the to-be-selected content, and adding a non-shared label to the non-shared object.

In this implementation, the non-shared label added to the non-shared object may be a preset mark such as a label number or an identifier, to distinguish the non-shared object from another object. In addition, the non-shared label may be displayed in the interface and/or recorded in the first mobile device. In this way, a user may be enabled to determine, based on a non-shared label displayed in the interface, a shared object and a non-shared object. The first mobile device may determine a non-shared object in objects based on a record, and this helps further determine the shared content.

In a possible implementation, the determining a non-shared object from objects displayed in the interface of the to-be-selected content may include:
determining a shared area in the interface of the to-be-selected content based on a detected first selection operation for the interface of the to-be-selected content, and determining the non-shared object based on the shared area; or
determining a non-shared area in the interface of the to-be-selected content based on a detected first selection operation for the interface of the to-be-selected content, and determining the non-shared object based on the non-shared area; or
when objects are displayed in the interface of the to-be-selected content, determining a shared object based on a detected second selection operation for the objects, and determining the non-shared object based on the shared object; or
when objects are displayed in the interface of the to-be-selected content, determining the non-shared object based on a detected second selection operation for the objects.

In this implementation, after the shared area is determined, an object other than an object located in the shared area may be determined as the non-shared object. If the non-shared area is determined, an object in the non-shared area may be directly determined as the non-shared object. In an example in which the non-shared object is determined, whether an object is in the non-shared area may be determined based on a ratio of an area of the object in the non-shared area to an overall area of the object. For example, it may be set that when the ratio is greater than 0.5, it is determined that the object is located in the non-shared area, and the object is determined as the non-shared object. Alternatively, for an object partially located in the non-shared area, an object confirmation reminder may be sent to remind the user to determine whether the object is the non-shared object. Alternatively, for an object partially located in the non-shared area, the object may be directly determined as the non-shared object. A manner of determining the shared object is similar to the manner of determining the non-shared object, and details are not described herein again.

In the foregoing manner, the non-shared object can be determined quickly and efficiently, so that the shared object can be determined efficiently.

In a possible implementation, after the non-shared label is added to the non-shared object, step S14 may include: when it is detected that the to-be-selected content changes and the changed to-be-selected content still includes all or a part of the non-shared objects, determining newly added shared content based on a detected selection operation for an interface of the changed to-be-selected content. Step S15 may include: determining new shared content based on non-shared labels of the all or a part of the non-shared objects and the newly added shared content, and sending the new shared content to the second mobile device.

In this implementation, when sending the new shared content, the first mobile device may determine a content change status based on the new shared content and the original shared content, determine, based on the content change status, the first data or the second data that needs to be sent, and send the first data or the second data to the second mobile device.

In this implementation, the first mobile device may present the objects on the screen by using different layers. During screen sharing, the first mobile device may create a same-origin virtual screen in the background, and display the interface of the to-be-selected content on the virtual screen. After a video application (as shown in FIG. 2) of the first mobile device determines the non-shared object and adds the non-shared label to the non-shared object by using a window manager (as shown in FIG. 2), when a surface manager (as shown in FIG. 2) controls to display the interface of the to-be-selected content on the screen, the surface manager removes, based on data of layers corresponding to the determined shared content and the to-be-selected content, data of a layer other than a layer of the shared content in the virtual screen, to obtain second data of an interface that includes only the shared content and that is in the virtual screen.

The foregoing method helps simplify an operation that needs to be performed to determine new shared content, so that efficiency and a speed of determining the new shared content are improved.

In a possible implementation, the method may further include: when a shared content preview condition is met, displaying a preview interface corresponding to the shared content, where the shared content preview condition may include either of the following: a time interval between a current moment and a moment at which the last selection operation is detected is greater than or equal to a duration threshold, and a triggering operation for performing preview is detected. Step S15 may include: when it is determined to send the shared content based on a detected operation for the preview interface, sending the shared content to the second mobile device.

In this implementation, the first mobile device may determine the duration threshold in advance based on a default setting or a user selection. For example, the duration threshold is set to 3 seconds based on the user selection. When determining that a time interval between a current moment and a moment at which the last selection operation is detected is greater than or equal to 3 seconds, the first mobile device may determine that the user has completed selection of the shared content. Therefore, the first mobile device generates a preview interface for the user based on the current shared content, and displays the preview interface for the user. This helps the user to determine, based on the preview interface, whether the shared content selected by the user is accurate.

In this implementation, a control used to preview the shared content may be set in the interface that displays the to-be-selected content, or a corresponding button may be set in the first mobile device. When it is determined that the control or the button is triggered, it is determined that a trigger operation for previewing is detected. A shortcut operation for previewing the shared content may be further set. When the shortcut operation is detected, it is determined that a trigger operation for previewing is detected. For example, the shortcut operation may be: performing a sliding operation on an interface based on a preset square or circular track, or performing an operation such as touching and holding or continuous tapping by using an existing button (for example, a power button) of the first mobile device. This is not limited in this application. A shared content sending control may be set in the preview interface. When a triggering operation of the shared content sending control is detected, the shared content displayed in the preview interface is sent to the second mobile device.

In a possible implementation, the method may further include: when it is determined, based on a detected operation for the preview interface, that shared content needs to be re-determined, determining new shared content based on a new selection operation for the interface of the to-be-selected content.

In this implementation, a manner of determining, based on the detected operation for the preview interface, that the shared content needs to be re-determined may include at least one of the following: It may be determined, when a display time of the preview interface exceeds preset duration (for example, 5 seconds), that the shared content needs to be re-determined; or it may be determined, when a reselection control is set in the preview interface and a triggering operation of the reselection control is detected, that the shared content needs to be re-determined, or the like. This is not limited in this application.

In the foregoing manner, accuracy of selecting shared content can be ensured.

In a possible implementation, the method may further include:
when a stop operation for the screen sharing mode is detected, stopping screen sharing.

In this implementation, the stop operation may be determined by the first mobile device based on an operation performed by the user on the first mobile device. For example, the stop operation for the screen sharing mode may be a trigger operation that is performed on a control or a button for stopping sharing and that is detected by the first mobile device, or may be a preset shortcut operation for stopping the screen sharing mode of the video call. The stop operation may alternatively be determined by the first mobile device based on a screen sharing stop request from the second mobile device. A person skilled in the art may set a stop operation of stopping a screen sharing mode of a video call. This is not limited in this application.

In the foregoing manner, the screen sharing mode may be stopped timely based on a requirement of a user, to meet different use requirements of the user.

The following describes, with reference to FIG. 4 to FIG. 9, an implementation process of screen sharing in a process in which a first mobile device establishes a video call with a second mobile device, to facilitate understanding for the screen sharing method that is based on a video call and that is provided in this application. A person skilled in the art should understand that the following application examples are merely for ease of understanding embodiments of this application, and should not be considered as a limitation on embodiments of this application.

As shown in FIG. 4, after the first mobile device establishes the video call with the second mobile device, it is determined that a video mode of the first mobile device is a conventional video mode (that is, the video mode is not a screen sharing mode). The first mobile device may display, on a screen of the first mobile device, content that needs to be displayed during the conventional video call. The content includes: a video image T1 that is shot by the first mobile device and that is displayed in a movable small window, a video image T2 that is shot by the second mobile device and that is displayed in full screen, controls such as a "mute" control, a "speaker" control (or referred to as a hands-free control), a "switch to voice" control, a "camera switching" control, and a "hang up" control that are related to the video call, a "more" control for viewing more operations during the video call, and a first screen sharing control G that is used to enable a screen sharing mode.

As shown in FIG. 5, when detecting a triggering operation performed by a user on the first screen sharing control G, the first mobile device determines that the user wants to set the video mode to the screen sharing mode. In this case, the first mobile device first sends a reminder 1 that indicates whether to determine to set the video mode to the screen sharing mode. The reminder 1 may remind the user in a form of text. For example, reminder text such as "Share my screen" and "Your screen will be seen by the other party. Are you sure you want to share your screen?" are displayed in the reminder 1. When it is detected that an "OK" control in the reminder 1 is triggered, the video mode is set to the screen sharing mode.

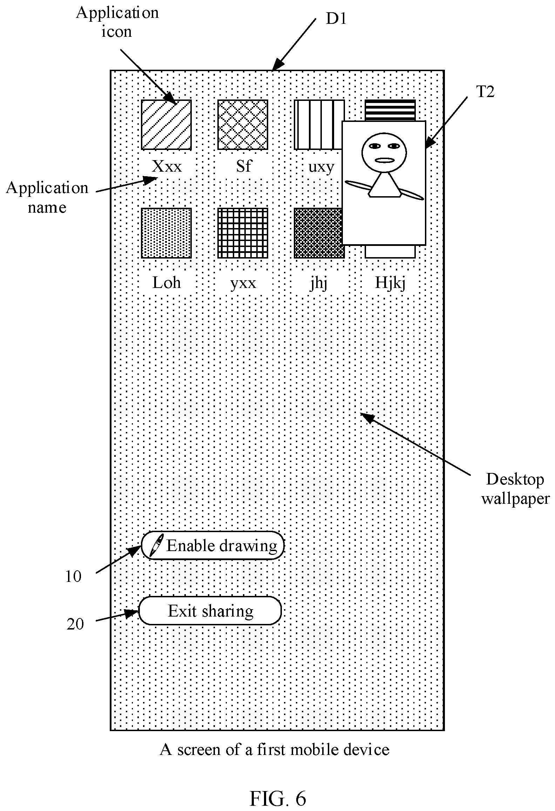

As shown in FIG. 6, after setting the video mode to the screen sharing mode, the first mobile device displays, on the screen, an interface D1 of to-be-selected content for the user. The to-be-selected content may include a plurality of objects, for example, icons and names of different applications, the video image T2 that is shot by the second mobile device and that is displayed in a movable small window, a desktop wallpaper, a selection control 10 for selecting a non-shared object, and a disabling control 20 for controlling disabling of the screen sharing mode.

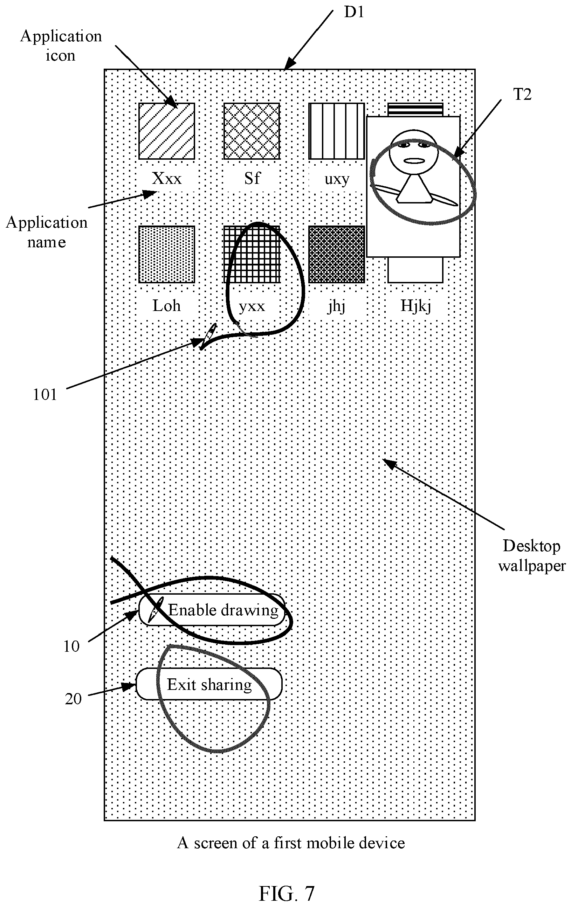

As shown in FIG. 7, when detecting that the selection control 10 is triggered, the first mobile device displays a paintbrush 101 on the interface D1 of the to-be-selected content. Then, four non-shared objects are determined based on a movement status of the paintbrush 101: an icon and a name of an application whose name is yxx, the video image T2 shot by the second mobile device, the selection control 10, and the disabling control 20. Further, shared objects are determined based on all displayed objects and non-shared objects, and shared content is determined based on the shared objects.

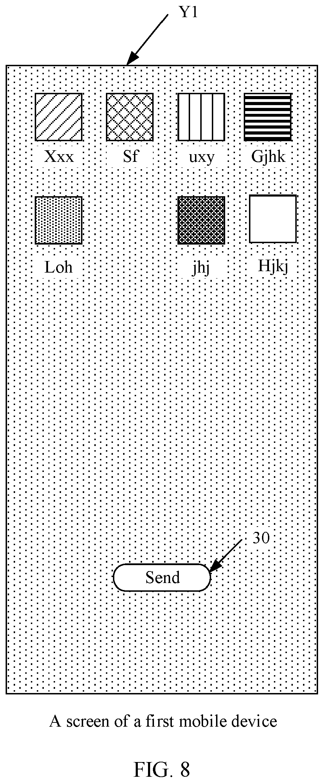

As shown in FIG. 8, when determining that a shared content preview condition is met, the first mobile device displays a preview interface Y1 corresponding to the shared content. In this case, the shared content and a shared content sending control 30 are displayed in the preview interface Y1. When it is detected that the shared content sending control 30 is triggered, the shared content is sent to the second mobile device.

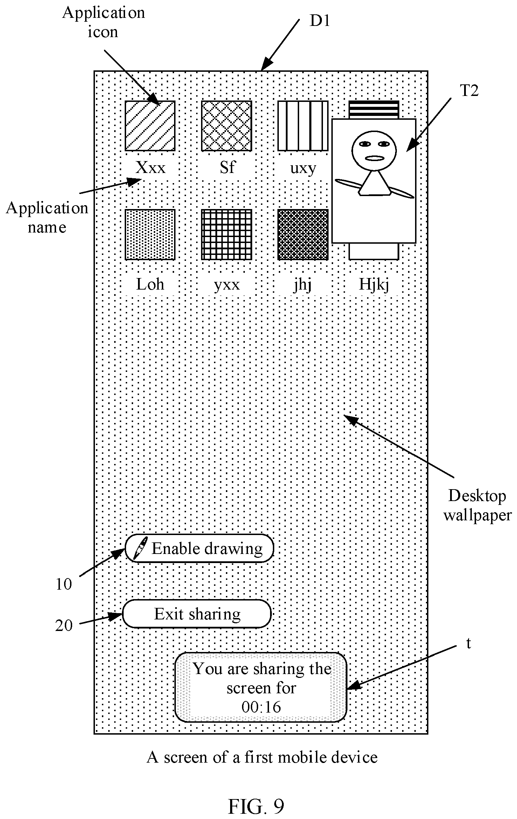

As shown in FIG. 9, when detecting that the shared content sending control 30 is triggered, the first mobile device no longer displays the preview interface Y1 on the screen when sending the shared content to the second mobile device, and continues to display the previous interface D1 of the to-be-selected content. In addition, screen sharing duration t is displayed, indicating that "You are sharing the screen for 00:16". Then, when it is detected that the content in the interface D1 of the to-be-selected content changes, if the selection control 10 is not triggered, new shared content is determined based on the non-shared objects and is sent to the second mobile device. If the selection control is triggered, new shared content is determined based on a newly added non-shared object and the original non-shared objects and is sent to the second mobile device.

This application provides a mobile device, where the mobile device may be used as the foregoing first mobile device, and the mobile device includes:
a display;
one or more processors; and
one or more memories, where
the one or more memories store one or more computer programs, the one or more computer programs include instructions, and when the instructions are executed by the one or more processors, the mobile device is enabled to perform the following steps:
   determining that a first mobile device establishes a video call with a second mobile device;
   determining that a video mode of the first mobile device is a screen sharing mode;
   displaying, on the display, an interface of to-be-selected content;
   determining shared content based on a selection operation on the interface of the to-be-selected content; and
   sending the shared content to the second mobile device, so that the second mobile device displays the shared content.

In a possible implementation, when the instructions are executed by the one or more processors, the mobile device is further enabled to perform the following step:
before the first mobile device establishes the video call with the second mobile device, the first mobile device sets, by default, the video mode during a video call to the screen sharing mode; or
before the first mobile device establishes the video call with the second mobile device, the first mobile device sets, based on a user operation, the video mode during a video call to the screen sharing mode; or
the first mobile device sets, based on a user operation, the video mode to the screen sharing mode during the video call.

In a possible implementation, when the instructions are executed by the one or more processors, the mobile device is further enabled to perform the following step:
determining a shared area in the interface of the to-be-selected content based on a detected first selection operation for the interface of the to-be-selected content, and determining the shared content based on the shared area; or
determining a non-shared area in the interface of the to-be-selected content based on a detected first selection operation for the interface of the to-be-selected content, determining a shared area based on the non-shared area, and determining the shared content based on the shared area.

In a possible implementation, when the instructions are executed by the one or more processors, the mobile device is further enabled to perform the following step:
when objects are displayed in the interface of the to-be-selected content, determining a shared object based on a detected second selection operation for the objects, and determining the shared content based on the shared object; or
when objects are displayed in the interface of the to-be-selected content, determining a non-shared object based on a detected second selection operation for the objects, determining a shared object based on the displayed objects and the non-shared object, and determining the shared content based on the shared object.

In a possible implementation, when the instructions are executed by the one or more processors, the mobile device is further enabled to perform the following step:
when it is detected that the first mobile device is in a video call state and the video mode of the first mobile device is the screen sharing mode, displaying the interface of the to-be-selected content, and highlighting the object existing in the interface of the to-be-selected content, where
a manner of the highlighting includes at least one of the following: displaying with a highlighted color and displaying with a frame.

In a possible implementation, when the instructions are executed by the one or more processors, the mobile device is further enabled to perform the following steps:
determining a non-shared object from objects displayed in the interface of the to-be-selected content; and
adding a non-shared label to the non-shared object.

In a possible implementation, when the instructions are executed by the one or more processors, the mobile device is further enabled to perform the following steps:
when it is detected that the to-be-selected content changes and the changed to-be-selected content still includes all or a part of the non-shared objects, determining newly added shared content based on a detected selection operation for an interface of the changed to-be-selected content; and
determining new shared content based on non-shared labels of the all or a part of the non-shared objects and the newly added shared content, and sending the new shared content to the second mobile device.

In a possible implementation, when the instructions are executed by the one or more processors, the mobile device is further enabled to perform the following step:
determining a shared area in the interface of the to-be-selected content based on a detected first selection operation for the interface of the to-be-selected content, and determining the non-shared object based on the shared area; or
determining a non-shared area in the interface of the to-be-selected content based on a detected first selection operation for the interface of the to-be-selected content, and determining the non-shared object based on the non-shared area; or
when objects are displayed in the interface of the to-be-selected content, determining a shared object based on a detected second selection operation for the objects, and determining the non-shared object based on the shared object; or
when objects are displayed in the interface of the to-be-selected content, determining the non-shared object based on a detected second selection operation for the objects.

In a possible implementation, when the instructions are executed by the one or more processors, the mobile device is further enabled to perform the following step:
sending first data corresponding to the shared content to the second mobile device, so that the second mobile device generates, based on the first data, an interface corresponding to the shared content and displays the interface corresponding to the shared content; or
sending second data of an interface corresponding to the shared content to the second mobile device, so that the second mobile device displays, based on the second data, the interface corresponding to the shared content.

In a possible implementation, when the instructions are executed by the one or more processors, the mobile device is further enabled to perform the following step:
displaying a first screen sharing control during the video call, and when it is detected that the first screen sharing control is triggered, setting the video mode to the screen sharing mode; or
during the video call, when it is detected that a shortcut corresponding to the screen sharing mode is triggered, setting the video mode to the screen sharing mode.

In a possible implementation, when the instructions are executed by the one or more processors, the mobile device is further enabled to perform the following steps:
when a shared content preview condition is met, displaying a preview interface corresponding to the shared content, where the shared content preview condition includes either of the following: a time interval between a current moment and a moment at which the last selection operation is detected is greater than or equal to a duration threshold, and a triggering operation for performing preview is detected; and
when it is determined to send the shared content based on a detected operation for the preview interface, sending the shared content to the second mobile device.

In a possible implementation, when the instructions are executed by the one or more processors, the mobile device is further enabled to perform the following step:
when it is determined, based on a detected operation for the preview interface, that shared content needs to be re-determined, determining new shared content based on a new selection operation for the interface of the to-be-selected content.

In a possible implementation, when the instructions are executed by the one or more processors, the mobile device is further enabled to perform the following step:
when a stop operation for the screen sharing mode is detected, stopping screen sharing.

The mobile device provided in this embodiment of this application may be used as the first mobile device. Screen sharing of the first mobile device with the second mobile device is implemented during a video call between the first mobile device and the second mobile device, and shared content can be determined based on selection of to-be-selected content by a user. In the screen sharing process, user operations are simple, screen sharing is implemented with high efficiency and a fast speed, so that users' diversified requirements for screen sharing are met.

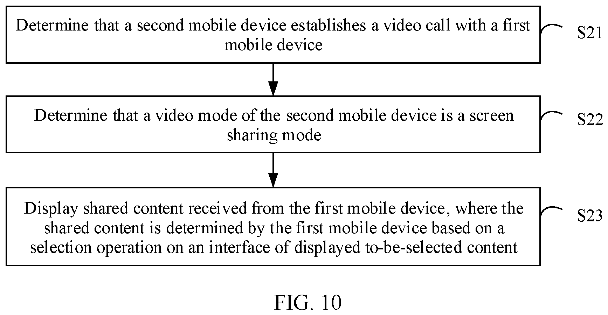

FIG. 10 is a flowchart of a screen sharing method based on a video call according to an embodiment of this application. As shown in FIG. 10, the method is applied to a second mobile device, and the method includes step S21 to step S23.

Step S21: Determine that the second mobile device establishes a video call with a first mobile device. A process in which the second mobile device establishes a video call is similar to the process in which the first mobile device establishes a video call. For details, refer to the related descriptions in the foregoing step S11.

Step S22: Determine a video mode of the second mobile device as a screen sharing mode.

An implementation of step S22 is similar to that of step S12. For details, refer to the related descriptions in step S12. Details are not described herein again.

Step S23: Display shared content received from the first mobile device, where the shared content is determined by the first mobile device based on a selection operation on an interface of displayed to-be-selected content.

The screen sharing method based on a video call provided in embodiments of this application may be applied to the second mobile device. Screen sharing of the first mobile device with the second mobile device is implemented during a video call between the second mobile device and the first mobile device, and the second mobile device may display the received selected shared content. In the screen sharing process, user operations are simple, screen sharing is implemented with high efficiency and a fast speed, so that users' diversified requirements for screen sharing are met.

In a possible implementation, the determining that a video mode of the second mobile device is a screen sharing mode may include:
before the second mobile device establishes the video call with the first mobile device, the second mobile device sets, by default, the video mode during a video call to the screen sharing mode; or
before the second mobile device establishes the video call with the first mobile device, the second mobile device sets, based on a user operation, the video mode during a video call to the screen sharing mode; or
the second mobile device sets, based on a user operation, the video mode to the screen sharing mode during the video call.

In the foregoing manner, whether the video mode of the second mobile device is the screen sharing mode can be accurately determined.

In a possible implementation, the displaying shared content received from the first mobile device may include:
when it is determined that first data corresponding to the shared content is received, generating, based on the first data, an interface corresponding to the shared content, and displaying the interface corresponding to the shared content; or
when it is determined that second data of an interface corresponding to the shared content is received, displaying, based on the second data, the interface corresponding to the shared content.

This application further provides a mobile device, where the mobile device includes:
a display;
one or more processors; and
one or more memories, where
the one or more memories store one or more computer programs, the one or more computer programs include instructions, and when the instructions are executed by the one or more processors, the mobile device is enabled to perform the following steps:
   determining that a second mobile device establishes a video call with a first mobile device;
   determining that a video mode of the second mobile device is a screen sharing mode; and
   displaying, on the display, shared content received from the first mobile device, where
   the shared content is determined by the first mobile device based on a selection operation on an interface of displayed to-be-selected content.

In a possible implementation, when the instructions are executed by the one or more processors, the mobile device is further enabled to perform the following step:
when it is determined that first data corresponding to the shared content is received, generating, based on the first data, an interface corresponding to the shared content, and displaying the interface corresponding to the shared content; or
when it is determined that second data of an interface corresponding to the shared content is received, displaying, based on the second data, the interface corresponding to the shared content.

In a possible implementation, when the instructions are executed by the one or more processors, the mobile device is further enabled to perform the following step:
before the second mobile device establishes the video call with the first mobile device, the second mobile device sets, by default, the video mode during a video call to the screen sharing mode; or
before the second mobile device establishes the video call with the first mobile device, the second mobile device sets, based on a user operation, the video mode during a video call to the screen sharing mode; or
the second mobile device sets, based on a user operation, the video mode to the screen sharing mode during the video call.

The mobile device provided in this embodiment of this application may be used as the second mobile device. Screen sharing of the first mobile device with the second mobile device is implemented during a video call between the second mobile device and the first mobile device, and the second mobile device may display the received selected shared content. In the screen sharing process, user operations are simple, screen sharing is implemented with high efficiency and a fast speed, so that users' diversified requirements for screen sharing are met.

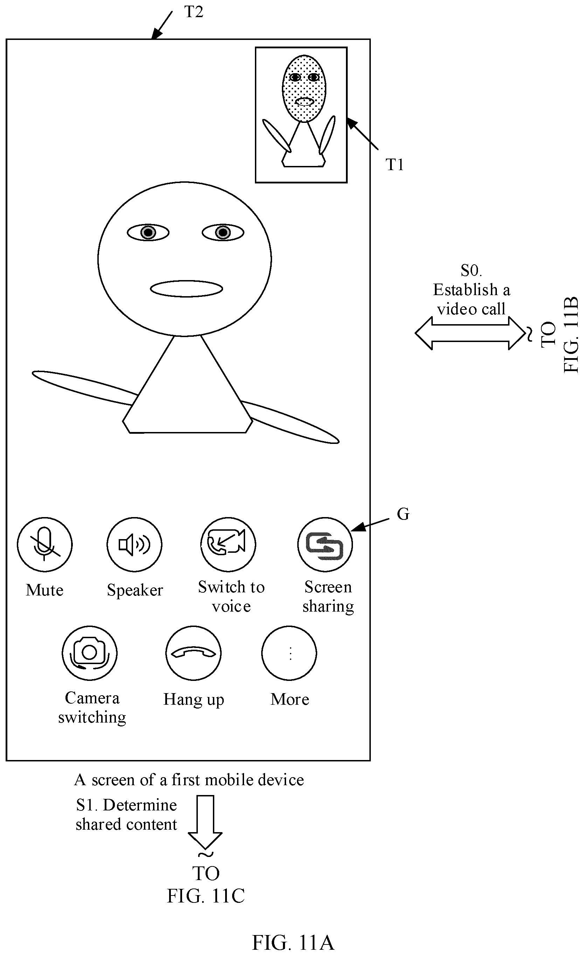

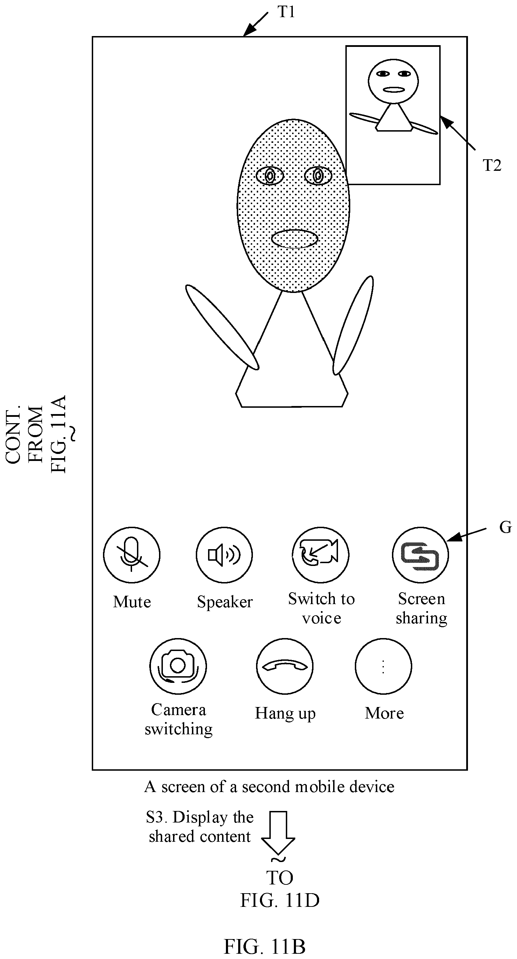

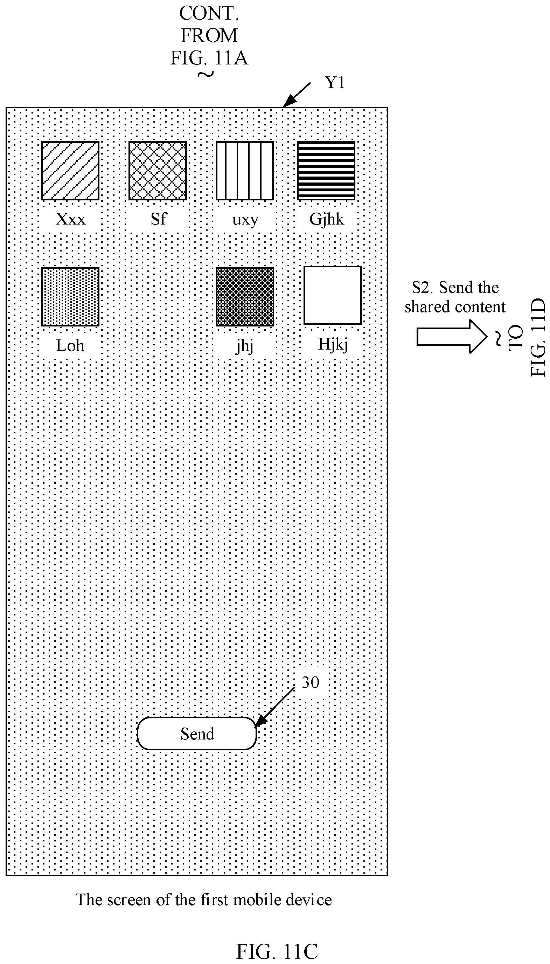

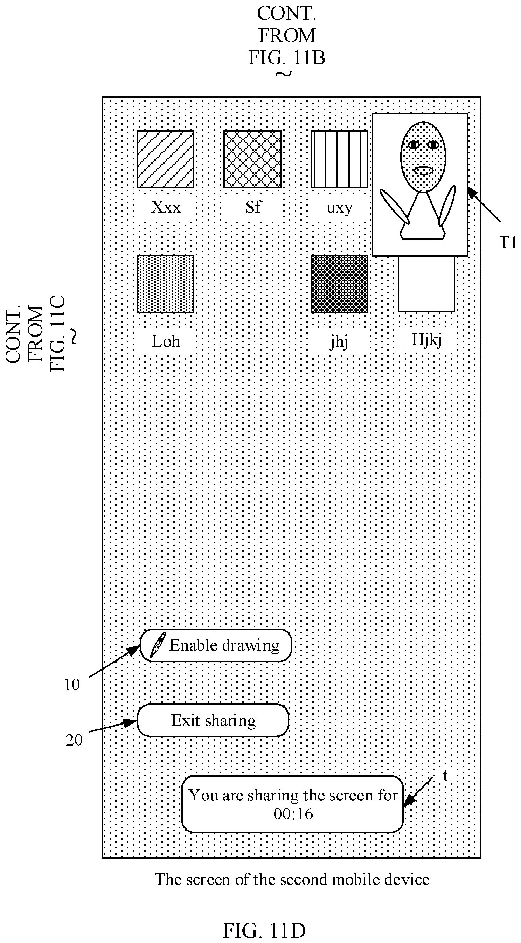

FIG. 11A to FIG. 11D are a schematic diagram of screen sharing in a screen sharing method based on a video call according to an embodiment of this application. As shown in FIG. 11A to FIG. 11D, a process in which a first mobile device and a second mobile device share a screen is as follows.

S0. The first mobile device establishes a video call with the second mobile device. After the video call is established, and after the first mobile device establishes the video call with the second mobile device, the first mobile device and the second mobile device each determine that a video mode thereof is a conventional video mode (that is, the video mode is not a screen sharing mode). The first mobile device and the second mobile device each may display, on a screen thereof, content that needs to be displayed during the conventional video call. Displayed content of the first mobile device includes: a video image T1 that is shot by the first mobile device and that is displayed in a movable small window, a video image T2 that is shot by the second mobile device and that is displayed in full screen, controls such as a "mute" control, a "speaker" control (or referred to as a hands-free control), a "switch to voice" control, a "camera switching" control, and a "hang up" control that are related to the video call, a "more" control for viewing more operations during the video call, and a first screen sharing control G that is used to enable a screen sharing mode. Displayed content of the second mobile device includes: the video image T2 that is shot by the second mobile device and that is displayed in a movable small window, the video image T1 that is shot by the first mobile device and that is displayed in full screen, controls such as a "mute" control, a "speaker" control (or referred to as a hands-free control), a "switch to voice" control, a "camera switching" control, and a "hang up" control that are related to the video call, a "more" control for viewing more operations during the video call, and a first screen sharing control G that is used to enable a screen sharing mode.

S1. The first mobile device determines shared content based on a user operation; when determining that a shared content preview condition is met, the first mobile device displays a preview interface Y1 corresponding to the shared content; and in this case, the shared content and a shared content sending control 30 are displayed in the preview interface Y1.

S2. When detecting that the shared content sending control 30 is triggered, the first mobile device sends the shared content to the second mobile device.

S3. After receiving the shared content, the second mobile device displays the shared content. In addition, the following content is displayed on the screen of the second mobile device: the video image T1 that is shot by the first mobile device and that is displayed in a movable small window, screen sharing duration t indicating that "You are sharing the screen for 00:16", a selection control 10 for selecting a non-shared object, and a disabling control 20 for controlling disabling of the screen sharing mode.

In the foregoing screen sharing process, for an operation performed by the first mobile device, refer to the related descriptions in the foregoing step S11 to step S15, and for an operation performed by the second mobile device, refer to the related descriptions in the foregoing step S21 to step S13.

In this way, that the first mobile device shares the selected content on the screen with the second mobile device can be implemented. Similarly, the second mobile device may alternatively share screen content with the first mobile device. An implementation thereof is the same as the foregoing process. Details are not described herein again.

This application further provides a screen sharing apparatus based on a video call, and the apparatus is configured to perform the foregoing screen sharing method that is based on a video call and that is applied to the first mobile device.

This application further provides a screen sharing apparatus based on a video call, and the apparatus is configured to perform the foregoing screen sharing method that is based on a video call and that is applied to the second mobile device.

This application further provides a computer storage medium, including computer instructions, where when the computer instructions are run on a mobile device, the mobile device is enabled to perform the foregoing screen sharing method that is based on a video call and that is applied to the first mobile device.

This application further provides a computer storage medium, including computer instructions, where when the computer instructions are run on a mobile device, the mobile device is enabled to perform the foregoing screen sharing method that is based on a video call and that is applied to the second mobile device.

This application further provides a computer program product, where when the computer program product is run on a computer, the computer is enabled to perform the screen sharing method that is based on a video call and that is applied to the first mobile device.

This application further provides a computer program product, where when the computer program product is run on a computer, the computer is enabled to perform the screen sharing method that is based on a video call and that is applied to the second mobile device.

It should be noted that although the foregoing embodiments are used as examples to describe the screen sharing method based on a video call and the mobile device, a person skilled in the art can understand that this application is not limited thereto. Actually, a user can flexibly set steps and modules based on personal preference and/or an actual application scenario, provided that the steps and modules comply with the technical solutions of this application.

This application may be a system, a method, and/or a computer program product. The computer program product may include a computer readable storage medium that carries computer readable program instructions for enabling a processor to implement aspects of this application.

The computer readable storage medium may be a tangible device that may hold and store instructions for use by an instruction execution device. The computer readable storage medium may be, for example, but is not limited to, an electrical storage device, a magnetic storage device, an optical storage device, an electromagnetic storage device, a semiconductor storage device, or any proper combination thereof. More specific examples (a non-exhaustive list) of the computer readable storage medium include: a portable computer disk, a hard disk, a random access memory (RAM), a read-only memory (ROM), an erasable programmable read-only memory (EPROM or a flash memory), a static random access memory (SRAM), a portable compact disc read-only memory (CD-ROM), a digital versatile disc (DVD), a memory stick, a floppy disk, a mechanical coding device, a punched card or an in-recess protrusion structure on which instructions are stored, for example, and any proper combination thereof. The computer readable storage medium used herein is not interpreted as an instantaneous signal itself, such as a radio wave or other freely propagating electromagnetic wave, an electromagnetic wave propagating through a waveguide or another transmission medium (for example, an optical pulse transmitted through an optical fiber cable), or an electrical signal transmitted through an electric wire.

The computer readable program instructions described herein may be downloaded from a computer readable storage medium to respective computing/processing devices or to an external computer or external storage device via a network, such as the Internet, a local area network, a wide area network, and/or a wireless network. The network may include copper transmission cables, optical fiber transmission, wireless transmission, routers, firewalls, switches, gateway computers, and/or edge servers. A network adapter card or a network interface in each computing/processing device receives computer readable program instructions from the network, and forwards the computer readable program instructions for storage in a computer readable storage medium in each computing/processing device.

The computer program instructions used to perform operations in this application may be assembly instructions, instruction set architecture (ISA) instructions, machine instructions, machine-related instructions, microcode, firmware instructions, status setting data, or source code or object code written in any combination of one or more programming languages, where the programming language includes an object-oriented programming language such as Smalltalk, C++, and the like, and a conventional procedural programming language such as a "C" language or a similar programming language. The computer readable program instructions may be completely executed on a user computer, partially executed on a user computer, executed as a stand-alone software package, partially executed on a user computer and partially executed on a remote computer, or completely executed on a remote computer or server. In the case of a remote computer, the remote computer may be connected to a user computer through any type of network, including a local area network (LAN) or a wide area network (WAN), or may be connected to an external computer (for example, through an Internet connection by using an Internet service provider). In some embodiments, an electronic circuit, such as a programmable logic circuit, a field programmable gate array (FPGA), or a programmable logic array (PLA), may be customized by using status information of the computer readable program instructions. The electronic circuit may execute the computer readable program instructions, to implement all aspects of this application.

Various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer readable program instructions.

These computer-readable program instructions may be provided to a processor of a general-purpose computer, a special-purpose computer, or another programmable data processing apparatus, to produce a machine so that when these instructions are executed by the processor of the computer or the another programmable data processing apparatus, an apparatus that implements functions/actions specified in one or more blocks in the flowcharts and/or block diagrams is produced. Alternatively, these computer readable program instructions may be stored in a computer readable storage medium. These instructions enable a computer, a programmable data processing apparatus, and/or another device to work in a specific manner. Therefore, the computer readable medium storing the instructions includes a manufactured product, and includes instructions to implement aspects of the functions/actions specified in one or more blocks in the flowcharts and/or block diagrams.

Alternatively, the computer readable program instructions may be loaded to a computer, another programmable data processing apparatus, or another device, so that a series of operation steps are performed on the computer, the another programmable data processing apparatus, or the another device, to generate a computer implementation process. In this way, the instructions executed on the computer, the another programmable data processing apparatus, or the another device implement functions/actions specified in one or more blocks in the flowcharts and/or the block diagrams.

The flowcharts and block diagrams in the accompanying drawings show system architectures, functions, and operations of possible implementations of the systems, methods, and computer program products according to a plurality of embodiments of this application. In this regard, each block in the flowcharts or block diagrams may represent a module, a program segment, or portion of instructions, and the module, the program segment, or the portion of instructions includes one or more executable instructions for implementing a specified logical function. In some alternative implementations, the functions marked in the blocks may occur in a sequence different from that marked in the accompanying drawings. For example, two consecutive blocks may actually be executed substantially concurrently, and the two consecutive blocks may sometimes be executed in a reverse order, depending on the functionality involved. It should also be noted that each block in the block diagrams and/or the flowcharts, and a combination of blocks in the block diagrams and/or the flowcharts may be implemented by a dedicated hardware-based system that performs a specified function or action, or may be implemented by a combination of dedicated hardware and computer instructions.

The foregoing has described embodiments of this application. The foregoing descriptions are examples, are not exhaustive, and are not limited to the disclosed embodiments. Many modifications and variations are apparent to a person of ordinary skill in the art without departing from the scope and spirit of the described embodiments. The selected terms used herein are intended to best explain principles of the embodiments, practical applications, or technical improvements to technologies in the marketplace, or to enable another person of ordinary skill in the art to understand the embodiments disclosed herein.

## Claims

1. A screen sharing method based on a video call, wherein the method comprises:
determining that a first mobile device establishes a video call with a second mobile device;
determining that a video mode of the first mobile device is a screen sharing mode;
displaying an interface of to-be-selected content;
determining shared content based on a selection operation on the interface of the to-be-selected content; and
sending the shared content to the second mobile device, so that the second mobile device displays the shared content.

2. The method according to claim 1, wherein the method further comprises:
before the first mobile device establishes the video call with the second mobile device, setting, by the first mobile device by default, the video mode during a video call to the screen sharing mode; or
before the first mobile device establishes the video call with the second mobile device, setting, by the first mobile device based on a user operation, the video mode during a video call to the screen sharing mode; or
setting, by the first mobile device based on a user operation, the video mode to the screen sharing mode during the video call.

3. The method according to claim 1, wherein the determining shared content based on a selection operation on the interface of the to-be-selected content comprises:
determining a shared area in the interface of the to-be-selected content based on a detected first selection operation for the interface of the to-be-selected content, and determining the shared content based on the shared area; or
determining a non-shared area in the interface of the to-be-selected content based on a detected first selection operation for the interface of the to-be-selected content, determining a shared area based on the non-shared area, and determining the shared content based on the shared area.

4. The method according to claim 1, wherein the determining shared content based on a selection operation on the interface of the to-be-selected content comprises:
when objects are displayed in the interface of the to-be-selected content, determining a shared object based on a detected second selection operation for the objects, and determining the shared content based on the shared object; or
when objects are displayed in the interface of the to-be-selected content, determining a non-shared object based on a detected second selection operation for the objects, determining a shared object based on the displayed objects and the non-shared object, and determining the shared content based on the shared object.

5. The method according to any one of claims 1 to 4, wherein the method further comprises:
when it is detected that the first mobile device is in a video call state and the video mode of the first mobile device is the screen sharing mode, displaying the interface of the to-be-selected content, and highlighting the object existing in the interface of the to-be-selected content, wherein
a manner of the highlighting comprises at least one of the following: displaying with a highlighted color and displaying with a frame.

6. The method according to claim 1, wherein the method further comprises:
determining a non-shared object from objects displayed in the interface of the to-be-selected content; and
adding a non-shared label to the non-shared object.

7. The method according to claim 6, wherein the determining shared content based on a selection operation on the interface of the to-be-selected content comprises:
when it is detected that the to-be-selected content changes and the changed to-be-selected content still comprises all or a part of the non-shared objects, determining newly added shared content based on a detected selection operation for an interface of the changed to-be-selected content; and
the sending the shared content to the second mobile device comprises:
determining new shared content based on non-shared labels of the all or a part of the non-shared objects and the newly added shared content, and sending the new shared content to the second mobile device.

8. The method according to claim 6, wherein the determining a non-shared object from objects displayed in the interface of the to-be-selected content comprises:
determining a shared area in the interface of the to-be-selected content based on a detected first selection operation for the interface of the to-be-selected content, and determining the non-shared object based on the shared area; or
determining a non-shared area in the interface of the to-be-selected content based on a detected first selection operation for the interface of the to-be-selected content, and determining the non-shared object based on the non-shared area; or
when objects are displayed in the interface of the to-be-selected content, determining a shared object based on a detected second selection operation for the objects, and determining the non-shared object based on the shared object; or
when objects are displayed in the interface of the to-be-selected content, determining the non-shared object based on a detected second selection operation for the objects.

9. The method according to claim 1, wherein the sending the shared content to the second mobile device comprises:
sending first data corresponding to the shared content to the second mobile device, so that the second mobile device generates, based on the first data, an interface corresponding to the shared content and displays the interface corresponding to the shared content; or
sending second data of an interface corresponding to the shared content to the second mobile device, so that the second mobile device displays, based on the second data, the interface corresponding to the shared content.

10. The method according to claim 2, wherein the setting, by the first mobile device based on a user operation, the video mode to the screen sharing mode during the video call comprises:
displaying a first screen sharing control during the video call, and when it is detected that the first screen sharing control is triggered, setting the video mode to the screen sharing mode; or
during the video call, when it is detected that a shortcut corresponding to the screen sharing mode is triggered, setting the video mode to the screen sharing mode.

11. The method according to claim 1, wherein the method further comprises:
when a shared content preview condition is met, displaying a preview interface corresponding to the shared content, wherein the shared content preview condition comprises either of the following: a time interval between a current moment and a moment at which the last selection operation is detected is greater than or equal to a duration threshold, and a triggering operation for performing preview is detected; and
the sending the shared content to the second mobile device comprises:
when it is determined to send the shared content based on a detected operation for the preview interface, sending the shared content to the second mobile device.

12. The method according to claim 11, wherein the method further comprises:
when it is determined, based on a detected operation for the preview interface, that shared content needs to be re-determined, determining new shared content based on a new selection operation for the interface of the to-be-selected content.

13. The method according to claim 1, wherein the method further comprises:
when a stop operation for the screen sharing mode is detected, stopping screen sharing.

14. A screen sharing method based on a video call, wherein the method comprises:
determining that a second mobile device establishes a video call with a first mobile device;
determining that a video mode of the second mobile device is a screen sharing mode; and
displaying shared content received from the first mobile device, wherein
the shared content is determined by the first mobile device based on a selection operation on an interface of displayed to-be-selected content.

15. The method according to claim 14, wherein the displaying shared content received from the first mobile device comprises:
when it is determined that first data corresponding to the shared content is received, generating, based on the first data, an interface corresponding to the shared content, and displaying the interface corresponding to the shared content; or
when it is determined that second data of an interface corresponding to the shared content is received, displaying, based on the second data, the interface corresponding to the shared content.

16. The method according to claim 14, wherein the determining that a video mode of the second mobile device is a screen sharing mode comprises:
before the second mobile device establishes the video call with the first mobile device, setting, by the second mobile device by default, the video mode during a video call to the screen sharing mode; or
before the second mobile device establishes the video call with the first mobile device, setting, by the second mobile device based on a user operation, the video mode during a video call to the screen sharing mode; or
setting, by the second mobile device based on a user operation, the video mode to the screen sharing mode during the video call.

17. A mobile device, wherein the mobile device comprises:
a display;
one or more processors; and
one or more memories, wherein
the one or more memories store one or more computer programs, the one or more computer programs comprise instructions, and when the instructions are executed by the one or more processors, the mobile device is enabled to perform the following steps:
determining that a first mobile device establishes a video call with a second mobile device;
determining that a video mode of the first mobile device is a screen sharing mode;
displaying, on the display, an interface of to-be-selected content;
determining shared content based on a selection operation on the interface of the to-be-selected content; and
sending the shared content to the second mobile device, so that the second mobile device displays the shared content.

18. The mobile device according to claim 17, wherein when the instructions are executed by the one or more processors, the mobile device is further enabled to perform the following step:
before the first mobile device establishes the video call with the second mobile device, setting, by the first mobile device by default, the video mode during a video call to the screen sharing mode; or
before the first mobile device establishes the video call with the second mobile device, setting, by the first mobile device based on a user operation, the video mode during a video call to the screen sharing mode; or
setting, by the first mobile device based on a user operation, the video mode to the screen sharing mode during the video call.

19. The mobile device according to claim 17, wherein when the instructions are executed by the one or more processors, the mobile device is further enabled to perform the following step:
determining a shared area in the interface of the to-be-selected content based on a detected first selection operation for the interface of the to-be-selected content, and determining the shared content based on the shared area; or
determining a non-shared area in the interface of the to-be-selected content based on a detected first selection operation for the interface of the to-be-selected content, determining a shared area based on the non-shared area, and determining the shared content based on the shared area.

20. The mobile device according to claim 17, wherein when the instructions are executed by the one or more processors, the mobile device is further enabled to perform the following step:
when objects are displayed in the interface of the to-be-selected content, determining a shared object based on a detected second selection operation for the objects, and determining the shared content based on the shared object; or
when objects are displayed in the interface of the to-be-selected content, determining a non-shared object based on a detected second selection operation for the objects, determining a shared object based on the displayed objects and the non-shared object, and determining the shared content based on the shared object.

21. The mobile device according to any one of claims 17 to 20, wherein when the instructions are executed by the one or more processors, the mobile device is further enabled to perform the following step:
when it is detected that the first mobile device is in a video call state and the video mode of the first mobile device is the screen sharing mode, displaying the interface of the to-be-selected content, and highlighting the object existing in the interface of the to-be-selected content, wherein
a manner of the highlighting comprises at least one of the following: displaying with a highlighted color and displaying with a frame.

22. The mobile device according to claim 17, wherein when the instructions are executed by the one or more processors, the mobile device is further enabled to perform the following steps:
determining a non-shared object from objects displayed in the interface of the to-be-selected content; and
adding a non-shared label to the non-shared object.

23. The mobile device according to claim 22, wherein when the instructions are executed by the one or more processors, the mobile device is further enabled to perform the following steps:
when it is detected that the to-be-selected content changes and the changed to-be-selected content still comprises all or a part of the non-shared objects, determining newly added shared content based on a detected selection operation for an interface of the changed to-be-selected content; and
determining new shared content based on non-shared labels of the all or a part of the non-shared objects and the newly added shared content, and sending the new shared content to the second mobile device.

24. The mobile device according to claim 22, wherein when the instructions are executed by the one or more processors, the mobile device is further enabled to perform the following step:
determining a shared area in the interface of the to-be-selected content based on a detected first selection operation for the interface of the to-be-selected content, and determining the non-shared object based on the shared area; or
determining a non-shared area in the interface of the to-be-selected content based on a detected first selection operation for the interface of the to-be-selected content, and determining the non-shared object based on the non-shared area; or
when objects are displayed in the interface of the to-be-selected content, determining a shared object based on a detected second selection operation for the objects, and determining the non-shared object based on the shared object; or
when objects are displayed in the interface of the to-be-selected content, determining the non-shared object based on a detected second selection operation for the objects.

25. The mobile device according to claim 17, wherein when the instructions are executed by the one or more processors, the mobile device is further enabled to perform the following step:
sending first data corresponding to the shared content to the second mobile device, so that the second mobile device generates, based on the first data, an interface corresponding to the shared content and displays the interface corresponding to the shared content; or
sending second data of an interface corresponding to the shared content to the second mobile device, so that the second mobile device displays, based on the second data, the interface corresponding to the shared content.

26. The mobile device according to claim 18, wherein when the instructions are executed by the one or more processors, the mobile device is further enabled to perform the following step:
displaying a first screen sharing control during the video call, and when it is detected that the first screen sharing control is triggered, setting the video mode to the screen sharing mode; or
during the video call, when it is detected that a shortcut corresponding to the screen sharing mode is triggered, setting the video mode to the screen sharing mode.

27. The mobile device according to claim 17, wherein when the instructions are executed by the one or more processors, the mobile device is further enabled to perform the following steps:
when a shared content preview condition is met, displaying a preview interface corresponding to the shared content, wherein the shared content preview condition comprises either of the following: a time interval between a current moment and a moment at which the last selection operation is detected is greater than or equal to a duration threshold, and a triggering operation for performing preview is detected; and
when it is determined to send the shared content based on a detected operation for the preview interface, sending the shared content to the second mobile device.

28. The mobile device according to claim 27, wherein when the instructions are executed by the one or more processors, the mobile device is further enabled to perform the following step:
when it is determined, based on a detected operation for the preview interface, that shared content needs to be re-determined, determining new shared content based on a new selection operation for the interface of the to-be-selected content.

29. The mobile device according to claim 17, wherein when the instructions are executed by the one or more processors, the mobile device is further enabled to perform the following step:
when a stop operation for the screen sharing mode is detected, stopping screen sharing.

30. A mobile device, wherein the mobile device comprises:
a display;
one or more processors; and
one or more memories, wherein
the one or more memories store one or more computer programs, the one or more computer programs comprise instructions, and when the instructions are executed by the one or more processors, the mobile device is enabled to perform the following steps:
determining that a second mobile device establishes a video call with a first mobile device;
determining that a video mode of the second mobile device is a screen sharing mode; and
displaying, on the display, shared content received from the first mobile device, wherein
the shared content is determined by the first mobile device based on a selection operation on an interface of displayed to-be-selected content.

31. The mobile device according to claim 30, wherein when the instructions are executed by the one or more processors, the mobile device is further enabled to perform the following step:
when it is determined that first data corresponding to the shared content is received, generating, based on the first data, an interface corresponding to the shared content, and displaying the interface corresponding to the shared content; or
when it is determined that second data of an interface corresponding to the shared content is received, displaying, based on the second data, the interface corresponding to the shared content.

32. The mobile device according to claim 30, wherein when the instructions are executed by the one or more processors, the mobile device is further enabled to perform the following step:
before the second mobile device establishes the video call with the first mobile device, setting, by the second mobile device by default, the video mode during a video call to the screen sharing mode; or
before the second mobile device establishes the video call with the first mobile device, setting, by the second mobile device based on a user operation, the video mode during a video call to the screen sharing mode; or
setting, by the second mobile device based on a user operation, the video mode to the screen sharing mode during the video call.

33. A screen sharing apparatus based on a video call, wherein the apparatus is configured to execute the screen sharing method based on a video call according to any one of claims 1 to 13.

34. A screen sharing apparatus based on a video call, wherein the apparatus is configured to execute the screen sharing method based on a video call according to any one of claims 14 to 16.

35. A computer storage medium, comprising computer instructions, wherein when the computer instructions are run on a mobile device, the mobile device is enabled to perform the screen sharing method based on a video call according to any one of claims 1 to 13.

36. A computer storage medium, comprising computer instructions, wherein when the computer instructions are run on a mobile device, the mobile device is enabled to perform the screen sharing method based on a video call according to any one of claims 14 to 16.

37. A computer program product, wherein when the computer program product is run on a computer, the computer is enabled to perform the screen sharing method based on a video call according to any one of claims 1 to 13.

38. A computer program product, wherein when the computer program product is run on a computer, the computer is enabled to perform the screen sharing method based on a video call according to any one of claims 14 to 16.
